(19) Europäisches Patentamt
European Patent Office
Office européen des brevets

(11) **EP 2 161 695 A1**

(12) **EUROPEAN PATENT APPLICATION**
published in accordance with Art. 153(4) EPC

(43) Date of publication:
**10.03.2010 Bulletin 2010/10**

(21) Application number: **08765167.5**

(22) Date of filing: **05.06.2008**

(51) Int Cl.:
***G08B 25/04*** *(2006.01)* ***G06T 1/00*** *(2006.01)*
***G08B 25/00*** *(2006.01)*

(86) International application number:
**PCT/JP2008/060354**

(87) International publication number:
**WO 2008/149923 (11.12.2008 Gazette 2008/50)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.06.2007 JP 2007151300**

(71) Applicants:
- **The University of Electro-Communications**
  **Chofu-shi**
  **Tokyo 182-8585 (JP)**
- **H.I.S.T. Co., Ltd.**
  **Tokyo 169-0073 (JP)**

(72) Inventors:
- **KANAMORI, Chisato**
  **Chofu-shi**
  **Tokyo 182-8585 (JP)**
- **MOGI, Shunsuke**
  **Chofu-shi**
  **Tokyo 182-8585 (JP)**
- **OKANO, Munenori**
  **Kasama-shi**
  **Ibaraki 309-1705 (JP)**

(74) Representative: **HOFFMANN EITLE**
**Patent- und Rechtsanwälte**
**Arabellastrasse 4**
**81925 München (DE)**

(54) **OBJECT DETECTION DEVICE AND GATE DEVICE USING THE SAME**

(57) A bright/dark pattern such as a checkered pattern is projected to a region to be monitored. The pattern is imaged time-sequentially. A difference between images at different time moments is acquired to generate a differential image. The differential image has a 0 value when no motion occurs in the region to be monitored. If any object moves in the region to be monitored, a differential image remains in a contour of the object which has moved. A flat feature is extracted from the contour and the position. According to the bright/dark pattern imaged in the contour and distorted by the existence of the object, a height of the object is detected.

Fig. 2

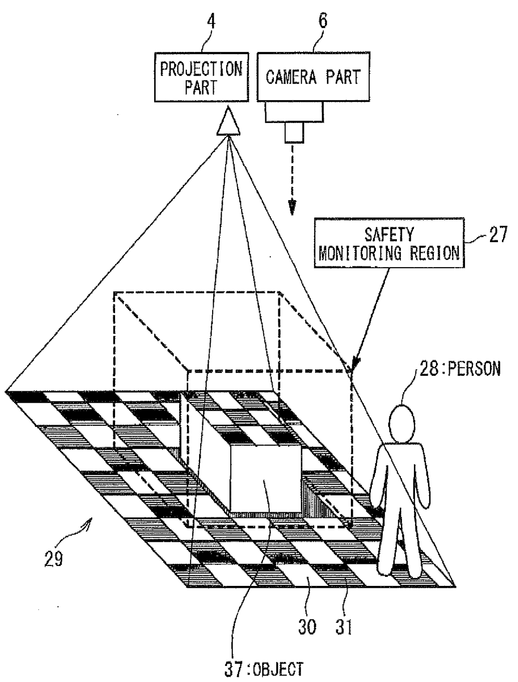


EP 2 161 695 A1

## Description

### Technical Field

The present invention relates to an apparatus for detecting an object in a target region. The present invention also relates to an apparatus for controlling the opening and closing of a gate according to the detection result of the detection apparatus. This application is based upon Japanese Patent Application No. 2007-151300 filed on June 7, 2007. Disclosure of the Japanese Patent Application is incorporates herein by this reference.

### Background Art

Detection apparatuses which detect the presence or absence or the movement of an object in a target region is widely used. The detection apparatus of this type is used, for example, to control gate apparatuses such as the automatic door. The detection apparatus is also used to monitor safety of a target region. To attain these objects, it is preferable to perform information processing at a high speed so as to be able to obtain a detection result in real time.
Japanese Laid-open Patent Application JP-A-Heisei, 9-27021 describes a passing object detection apparatus and a passing object calculation device. With this technique, an image taken by projecting a bright spot matrix onto a monitoring region is processed, thereby detecting passing if a plurality of persons passes through the monitoring region.
Japanese Unexamined Patent Publication No. 2001-249008 describes a monitoring device including: an irradiation part irradiating a field of a subject with a predetermined projection pattern; an image taking part taking an image of a field of the subject, and generating a roving images from a movement of the projection pattern in the field of the subject; a moving body detection part obtaining a shape or a size of a moving body in the subject based on the moving image generated by the image taking part; and a monitoring part outputting alarm information based on the shape or the size of the moving body detected by the moving body detection part.

### Disclosure of Invention

To attain the high-speed information processing as described in the "Background Art" part at low cost, it is desired to be able to obtain a detection result with simple processing that does not require an expensive processor, image processing software and the like.
In some cases, it is desirable to avoid taking a clear image using a monitoring camera or the likes from a viewpoint of primacy.
It is an object of the present invention to provide a technique for detecting an object in a target region by simple processing.
It is another object of the present invention to provide a technique capable of monitoring a target without clearly recording the appearance of the target.
Agate apparatus according to the present invention includes: a projection part projecting a repetitive pattern in which a first region having a first optical characteristic amount and a second region having a second optical characteristic amount are alternately arranged to a monitoring target region; an image taking part taking an image of the monitoring target region; a break extraction part extracting a break region which is a region in which a first image taken by the image taking part at a first time and a second image taken at a second time are different from each other; a characteristic amount extraction part extracting a predetermined characteristic amount of the break region; and a gate control part controlling opening and closing of a gate based on the predetermined characteristic amount.
In the gate apparatus according to the present invention, the characteristic amount extraction part includes an area calculation part calculating an area of the break region. The area calculation part calculates a count number which is obtained by counting at least one of the first regions or the second regions included in the break region as the area.
In the gate apparatus according to the present invention, the projection part is installed on a ceiling such that a field of view of the image taking part is directed downward. A gate blocks a passage between a side of the monitoring target region and a side opposite to the monitoring target region from the gate.
In the gate apparatus according to the present invention, the break extraction part generates a difference image in which a deformed repetitive pattern which is a pattern being deformed from the repetitive pattern is included in the break region, and extract the break region as a filled-in region by converting an optical characteristic amount of the second region which is pinched by the first region, in the deformed repetitive pattern into the first optical characteristic amount. The gate control part controls the opening and closing of the gate based on a time-series movement of the filled-in region.
In the gate apparatus according to the present invention, the break region extraction part generates a difference image in which a deformed repetitive pattern which is a pattern being deformed from the repetitive pattern is included in the break region by calculating a difference between the first image and the second image. The characteristic amount

extraction part further includes a height information calculation part calculating a height of an object existing in the break region as height information based on the deformed repetitive pattern. The gate control part controls the opening and closing of the gate based on the height information.

In the gate apparatus according to the present invention, the projection part projects the repetitive pattern such that the first region and the second region are periodically arranged in a first direction and a second direction, An optical axis of the image taking part for taking an image of the monitoring target region is arranged to be deviated from an optical axis of an optical system of the projection part for projecting the repetitive pattern by a predetermined offset value in the first direction, and arranged in a same position with the optical axis of the optical system in the second direction.

In the gate apparatus according to the present invention, the characteristic amount extraction part further includes a height information calculation part calculating a height of an upper surface of an object existing in the monitoring target region as height information based on a magnitude of deviation of the repetitive pattern projected on the object from the repetitive pattern projected on a background surface of the monitoring target region in the first direction. The gate control part controls the opening and closing of the gate based on the height information.

In the gate apparatus according to the present invention, the break extraction part executes a shade exclusion process by which a region of the break region at an edge in the first direction whose luminance is equal to or lower than a predetermined value is excluded from the break region.

In the gate apparatus according to the present invention, the repetitive pattern is formed by irradiating an infrared ray to the first region and not irradiating an infrared ray to the second region.

In the gate apparatus according to the present invention, the break extract ion part extracts a second break region being a region in which the second image and a third image taken at a third time are different from each other. The characteristic amount extraction part further includes a movement direction detection part detecting a direction of a movement of an object existing in the monitoring target region based on a position of the break region and a position of the second break regions, The gate control part controls the opening and closing of the gate based on the direction of the movement,

In the gate apparatus according to the present invention, the gate control part controls the opening and closing of the gate based on a shape of the break region.

In the gate apparatus according to the present invention, the characteristic amount extraction part further includes a stay time monitoring part monitoring a stay time during which an object indicated by the break region stays in the monitoring target region.

In the gate apparatus according to the present invention, the image of the monitoring target region taken by the image taking part is converted into a binary image by a first threshold value being near the first optical characteristic amount and a second threshold value being near the second optical characteristic amount.

An object detection apparatus according to the present invention includes: a projection part projecting a repetitive pattern in which a first region having a first optical characteristic amount and a second region having a second optical characteristic amount are alternately arranged to a monitoring target region; an image taking part taking an image of the monitoring target region; a break extraction part extracting a break region which is a region in which a first image taken by the image taking part at a first time and a second image taken by the image taking part at a second time are different from each other; and a characteristic amount extraction part extracts a predetermined characteristic amount of the break region.

In the object detection apparatus according to the present invention, the break extraction part generates a difference image in which a deformed repetitive pattern which is a pattern being deformed from the repetitive pattern is included in the break region, and extract the break region as a filled-in region by converting an optical characteristic amount of the second region which is pinched by the first region in the deformed repetitive pattern into the first optical characteristic amount.

The present invention provides a technique for detecting an object in a target region by simple processing. The present invention further provides a technique capable of monitoring a target without clearly recording the appearance of the target.

**Brief Description of Drawings**

Fig. 1 shows a configuration of an object detection apparatus;
Fig. 2 shows a situation where the object detection apparatus is used;
Fig. 3 shows an operation performed by a projection control part;
Fig. 4 shows an operation performed by an image taking control part;
Fig. 5 shows an operation performed by a break detection and extraction part;
Fig. 6 shows an operation performed by a plane characteristic amount extraction part;

Fig. 7 shows an operation performed by a height characteristic amount extraction part;
Fig. 8 shows an operation performer by a time-series characteristic amount extraction part;
Fig. 9 shows an operation performed by an evaluation, judgment and report part;
Fig. 10 shows an example of image processing;
Fig. 11 shows a situation where a gate apparatus is used;
Fig. 12A shows a flow of processing an image data;
Fig. 12B shows a flow of processing an image data;
Figs. 13A to 13C are examples of processing a mask image;
Figs. 14A to 14C are examples of processing a mask extraction image;
Figs. 15A to 15C are examples of processing a shade-excluded mask image;
Figs. 16A to 16E are examples of processing a shade-excluded mask extraction image;
Figs. 17A to 17D are examples of processing an image for measuring displacement;
Fig. 18 shows a displacement between a background image and a pattern projected onto an upper surface of an object;
Figs. 19A and 19B show relationship between a distance between an upper surface of the object and a sensor and the displacement of the pattern; and
Fig. 20 shows relationship between the displacement of the pattern and a height of the object.

**Best Mode for Currying out the Invention**

Best modes for carrying out the present invention will be described hereinafter: referring to the drawings. Fig. 1 is a block diagram showing a configuration of an object detection apparatus according to an embodiment of the present invention. An object detection apparatus 1 includes a bus 2 connecting various types of devices to one another so that the devices can communicate information with one another. The devices connected to the bus 2 will be described below. These devices operate based on information received from the other devices via the bus 2.

A gate control part 3 will be described later. A projection control part 5 controls a projection operation performed by a projection part 4 that is a pattern projector. An image taking control part 7 controls a camera part 6 that is a digital camera. An image processing and calculation part 8 performs image processing on an image taken by the camera part 6. The image processing and calculation part 8 is a functional block realized by a CPU described later which reads out a software stored in a storage device and executes it, Each of the constituent elements described below as a program indicates such a functional block.

The object detection apparatus 1 includes a break detection and extraction part 9, a plane characteristic amount extraction part 10, a height characteristic amount extraction part 13, a time-series characteristic amount extraction part 14, and an evaluation, judgment and report part 17. The plane characteristic amount extraction part 10, the height characteristic amount extraction part 13, and the time-series characteristic amount extraction part 14 constitute a characteristic amount extraction part 12. The object detection apparatus 1 also includes: a pattern memory 20 storing therein a pattern projected by the projection part 4; a time-series image memory 21 storing therein a time-series image taken by the camera part 6; a break extraction image memory 22 and a mask extraction image memory 23 storing therein a break extraction image and a mask image generated by the break detection and extraction part 9 based on the time-series image, respectively; a characteristic amount memory 24 storing therein characteristic amounts extracted by the plane characteristic, amount extraction part 10, the height characteristic amount extraction part 13, and the time-series characteristic amount extraction part 14, respectively based on the break extraction image and the mask extraction image; a parameter database 25 storing therein various parameters serving as references for performing output processing such as alarming based on the characteristic amounts, and an object database 26. The object detection apparatus 1 includes a program ROM and a RAM 18, and the CPU 19 controlling the above-stated respective devices.

Fig. 2 shows a situation where the object detection apparatus 1 according to the present embodiment is disposed. A safety monitoring region 27 monitored by the object detection apparatus 1 is set. In Fig. 2, an object 37 is placed within the safety monitoring region 27 so as to facilitate understanding the situation to which the object detection apparatus 1 is applies. The object detection apparatus 1 is used to detect entry of a person 28 or the like aground the object 37 that is a monitoring target. Alternatively, the object detection apparatus 1 is used to detect entry of the person 28 or the like abound the object 37 that is a machine tool or a chemical substance dangerous if the person 28 or the like approaches the object thoughtlessly.

The projection part 4 is provided near the safety monitoring region 27. A location where the projection part 4 is provided is typically the ceiling of the building where the safe monitoring part 27 is set. The projection part 4 projects a pattern 29 stored in the pattern memory 20 in a direction in which the safety monitoring region 27 is set under control of the projection control part 5. In an example of Fig. 2, the projection part 4 projects this pattern 29 in the downward direction in which the safety monitoring region 27 is set. The safety monitoring region 27 is included in a plane connecting a light source of the projection part 4 to an outline of the pattern 29 projected onto the floor surface.

In Fig. 2, the checkerboard pattern 29 is drawn. This pattern 29 includes bright portions 30 and dark portions 31 arranged periodically. The bright portions 30 and the dark portions 31 are alternately arranged. In a typical example, an infrared ray having predetermined brightness is projected onto each bright portion 30 whereas no infrared ray is projected onto each dark portion 31. The periodic bright and dark pattern 29 is formed by brightness difference among infrared rays. This pattern 29 can be formed by another means such as projecting electromagnetic waves having different wavelengths onto the bright portions. 30 and the dark portions 31 in place of the brightness difference. That is, the pattern 29 is formed by alternately arranging first regions each including a first optical characteristic amount and second regions each including a second optical characteristic amount.

The pattern 29 is not limited to the checkerboard pattern but may be another pattern as long as the pattern is a repetitive pattern (in other world, a tile pattern). For example, the pattern 29 may be a pattern in which a predetermined region, is filled by alternately arranging triangular bright portions and dark portions. Such a pattern includes first regions and second regions corresponding to the bright portions 30 and the dark portions 31 shown in Fig. 2, respectively. It is preferable that each of the first and second regions has a closed outline since it is easy for such outlines to generate a break extraction image described later.

The camera part 6 is provided on the ceiling to be adjacent to the projection part 4, and generates time-series images by taking an image of the pattern 29 in time series. The time-series image is a group including a moving image or static images taken at predetermined time intervals. The image taken by the camera part 6 includes the entire safety monitoring region 27.

The operation performed by the object detection apparatus 1 configured as explained above will be described below. Fig. 3 shows an operation performed by the projection control part 5. The projection control part 5 reads a projection condition such as brightness from the storage device (step S1). The projection control part 5 reads the pattern 29 from the pattern memory; 20 (step S2), The projection controls part 5 controls the projection part 4 to project the read pattern 29 (step S3). The projection control part 5 monitors whether or not the CPU 19 transmits an instruction to change the projection condition (step S4). If there is no change in the projection condition, the projection control part 5 controls the protection part 4 to continue projecting the pattern 29. If the projection condition is changed, the projection control part 5 controls the projection part 4 to project the pattern 29 under a new projection condition.

Fig. 4 shows an operation performed by the image taking control part 7. The image taking control part 7 reads an image-taking condition such as the sensitivity, the aperture, the focus, and the image-taking timing from the storage device (step S5). The image taking control part 7 controls the camera part 6 to take an image of the safety monitoring region 27 and generates a time-series image thereof (step S6). The image taking control part 7 sequentially stores time-series images in the memory 21 (step S7). At this time, the image taking control part 7 also stores the image-taking time. The image taking control part 7 monitors whether or not the CPU 19 transits an instruction to change the image-taking condition (step S8). If there is no change in the image-taking condition, the image taking control part 7 controls the camera part 6 to continue taking an image of the safety monitoring region 27. If the image-taking condition is changed, the image taking control part 7 controls the camera part 6 to take an image of the safety monitoring region 27 under the new image-taking condition. The camera part 6 constantly takes an image of the safety monitoring region 27 throughout a period of monitoring the safety monitoring region 27 in parallel to projection of the pattern 29 by the projection part 4. While there is not change in the image-taking condition, a field of view of the camera part 6 is fixed.

The image processing and calculation part 8 may convert the time-series image taken by the camera part 6 into binary data based on a first threshold value close to the brightness of the bright portions 30 and a second threshold value close to the brightness of the dark portions 31, and generate binarized time-series image, In this case, the binarized time-series images are stored in the time-series image memory 21 and to serve as a target data for the subsequent processing. The binarized images are desirable in view of privacy protection since first, the accuracy of subsequent processing is improved and second, a clear image of the subject becomes invisible.

Fig. 5 shows an operation performed by the break detection and extraction part 9, The break detection and extraction part 9 reads the time-series images stored in the time-series image memory 21 in real time (step S9). If the time series image taken by the camera part 6 is moving image, the break detection and extraction part 9 extracts and reads frames constituting the moving image from the moving image at a predetermined time interval. If the time series images taken by the camera part 6 are static images, the break detection and extraction part 9 sequentially reads latest static image. Fig. 10 shows an example of time-series images 33.

The break detection and extraction part 9 calculates the difference between the image, taken at a first timing and the image taken at a second timing among the static images constituting the time-series images, and generates a difference image 34 (step S10). If the time-series images are taken at intervals of, for example, one second, the break detection and extraction part 9 calculates the absolute value of the difference between the image one second before and the latest image for every pixel to generate the difference image 34. By generating the difference images 34 for respective time, a time series of difference images is generated. Each of the difference images 34 is a binary image including white pixels corresponding to the bright portions 30 and black pixels corresponding to the dark portions.

In a static state in which no motion is made in the safety monitoring region 27, an image 33-1 taken at the first

timing is identical to an image 33-2 taken at the second timing, and the difference image 34-1 is, therefore, a uniform image in which each pixel has a brightness of 0. The region occupied by the 0-value pixel is referred to as a "black region," hereinafter, If the safety monitoring region 27 is a flat floor surface or an unmoved object 37 is put in the safety monitoring region 27, the break detection and extraction part 9 generates the uniform difference image 34-1 filled by such black region. While the uniform difference image 34-1 is generated, a safety region secure signal indicating that there is no motion in the safety monitoring region 27 is transmitted to the evaluation, judgment and report part 17. While the uniform differential signal 34-1 is generated, the break detection and extraction part 9 repeatedly executes processing from the steps S9 to S11 (step S11 NO).

When an object moves in the safety monitoring region 27, a break difference image 34-2 in which a break region that is not the uniformly filled image is present in a region corresponding to the object of the difference image 34 is generated (step 311 YES),

When the break detection and extraction part 9 has judged that the break difference image 34-2 is generated, the break detection and extraction part 9 generates a break extraction images 35 in which a break region, which is a uniformly filled image is distinguished from the region surrounding the break region. The break region in the break extraction image 35 is filled by, for example, a bright color identical in brightness to the bright portions 30. The region uniformly and brightly filled is referred to as a "white region, "hereinafter. The break detection and extraction part 9 stores the generated time-series break extraction image 35 in the break extraction image memory 22 (step S12).

The white region is generated, for example by the following meals, Pixels of the break difference image 34-2 are scanned in a predetermined scanning direction. If one or more black pixels are sandwiched between one white pixel and the other white pixel, the black pixels are converted into white pixels. This processing is executed easily particularly if both the bright portions 30 and the dark portions have closed outlines. Such the processing facilitates generating the break extraction images 35.

The break detection and extraction part 9 extracts an image of the region corresponding to the break region in the break extraction image 35 from the time series image memory 21, buries the extracted image into the break region in the break extraction images 35 to generate a.mask extraction image 36, and stores the mask extraction image 36 in the mask extraction image memory 23 (step S13). Only the pattern 29 projected on to the object moving in the safety monitoring region 27 appears in this mask extraction image 36. When this processing is finished, the break detection and extraction part 9 repeatedly executes processing at and after the step S9.

Fig. 6 shows an operation performed by the plane characteristic amount extraction section 10. The plane characteristic amount extraction section 10 reads the break extraction image 35 from the break extraction image memory 22 (step S20). The plane characteristic amount extraction section 10 individually identifies and allocates an identifier to the break region (step S21). The plane characteristic amount extraction section 10 extracts characteristic amounts such as the position, the shape, the vertical and horizontal sizes or the largest diameter, and the area of the break region while masking the extracted characteristic amounts correspond to the identifier of the break region (steps S22 and S23).

The area of the break region is extracted by, for example, the following means. The plane characteristic amount extraction part 10 reads the mask extraction image 36. The plane characteristic amount extraction part 10 identifies the break region whose size is to be extracted in mask extraction image 36. A count part 11 included in the plane characteristic amount extraction part 10 counts at least one of the numbers of bright regions and the dark regions included in the break region to generate a count value. An approximate area of the target can be recognized from this count value. Such a count processing can be executed at high speed with a small calculation amount.

The plane characteristic amount extraction part 10 creates a characteristic amount list on information about the break region obtained in the steps S21 to S23, and stores the created list in a characteristic amount list 24 (step S24). The processing in the steps S22 to S24 is executed for all break regions sequentially (step S25).

Fig. 7 shows an operation performed by the height characteristic amount extraction part 13. The height characteristic amount extraction part 13 reads the mask extraction image 36 from the mask extraction image memory 23 (step S30), Each of the break regions included in the mask extraction image 36 is individually identified and allocated a specific identifier (step S31). The height characteristic amount extraction part 13 calculates the shape and the size of the break region.

When a target is present in the safety monitoring region 27, the magnitude, the shape, and the position of the pattern 29 projected onto the target change with respect to the pattern of the floor surface. The height characteristic amount extraction part 13 generates height information indicating the height of the target corresponding to each break region from this change (steps S32 and S33).

The height characteristic amount extraction part 13 creates a characteristic amount list of information regarding the break region obtained in the steps S31 to S33, and stores the created characteristic amount list in the characteristic amount list 24 (step S34). The processing in the steps S32 to S34 is executed for all break region sequentially (step S35).

Fig. 8 shows an operation performed by the time-series characteristic amount extraction part 14. The time-series characteristic amount extraction part 14 reads the characteristic amount list from the characteristic amount memory 24 (step S40). The time-series characteristic amount extraction part 14 classifies every break region based on the

information of the characteristic amount list and the information registered in the object database 26. For example, in a case where a lower limit value and an upper limit value of the height of a person, and a lower limit value and an upper limit value of the size of a person are registered in the object database, when the height and the size stored in the characteristic amount list is within respective range between those lower and upper limits, there is possibility that the target corresponding to the break region is a person. Therefor the identifier specifying the break region is stored with the classification of the person (step S41).

The time-series characteristic amount extraction part 14 tracks a time-series movement of the break region. When the distance between positions of the break regions in the two connective break extraction images 35 among the time-series break extraction images 35 is within a predetermined distance, the time-series characteristic amount extraction part 14 determines that the break regions are those caused by a same object and allocates an identical identifier to the break regions. A time-series change in the position of the break region to which the identical identifier is allocated is obtained from the time-series break extraction images 35. A moving direction detection part 15 included in the time-series characteristic amount extraction part 14 calculates a moving direction and a moving speed from this time-series change. A stay time monitoring part 16 included in the time-series characteristic amount extraction part 14 calculates a stay time being the period since generation until disappearance of the break image to which an identical identifier is allocated, thereby calculating the time during which a certain target has been stayed in the safety monitoring region (steps S42 and S43).

The timo-series a characteristic amount extraction part 14 creates a characteristic amount list of information regarding the break region obtained in the steps S41 to S43, and stores the created characteristic amount list in the characteristic amount list 24 (step S44). The processing in the steps S42 to S44 is executed for all break regions sequentially (step S45).

Fig. 9 shows an operation performed by the evaluation, judgment and report part 17. The evaluation, judgment and report part 17 monitors whether or not the break detection and extraction part 9 detects a break (step S14), If the break detection and extraction part 9 does not detect a break, the evaluation, judgment and report part 17 evaluates and determines that safety is secured (step S15), and outputs the result of the evaluation and determination as a safety notification (step S16). If the break detection and extraction part 9 detects the break, the object detection apparatus 1 is triggered to start an operation of the characteristic amount detection. To decide whether or not to transmit the notification, the evaluation, judgment and report part 17 filters the characteristic amounts stored in the characteristic amount memory 24 by using a predetermined reference such as the area, size or height (step S16-1). If the evaluation, judgment and report part 17 determines that there is no need to transmit the notification as the result of filtering, the evaluation, judgment and report part 17 executes similar processing to that performed when no break is detected. By performing this processing, unnecessary object detection can be avoided and malfunction is presented. When the notification is determined to be necessary, the evaluation, judgment and report part 17 outputs a first notification of safety break for urging an alarm (step S17). Thereafter, the characteristic amount list is evaluated and judged, For example, if the magnitude recorded in the characteristic amount memory 24 is smaller than a predetermined reference, the evaluation, judgement and report part 17 determines that the target is not a person and makes an evaluation regarding safety based on the determination (step S18). The evaluation, judgment-and report part 17 outputs the data recorded in the characteristic amount list, the results of the evaluation and determination as detailed information (step S19). An operator can evaluate the safety by referring to the output result.

Fig. 11 shows a gate apparatus using the object detection apparatus 1. The gate apparatus includes an automatic door 32 as well as the object detection apparatus The gate control part 3 shown in Fig. 1 controls the automatic door 32 to be opened or closed. The automatic door 32 blocks passing between the side on which the safety monitoring region 27 is present and the opposite side to the side on which the safety monitoring region 27 is present with respect to the automatic door 32 when the automatic door 32 is closed.

The gate control part 3 controls the automatic door 32 based on the information stored in the characteristic amount memory 24 such as the position, the shape, the size, and the area of each break region extracted by the plane characteristic amount extraction part 10, the height of the target extracted by the height characteristic amount extraction part 13, and the moving direction, moving speed, and stay time calculated by the time-series characteristic amount extraction part 14. For example, when the break region is moving in the direction toward the automatic door 32, the gate control part 3 judges that the target is moving toward the automatic door 32 and controls the automatic door 32 to be opened. The gate control part 3 controls the automatic door 32 to be opened only when the size (the area of the break region) and the height of the target fall within predetermined regions, respectively. It is thereby possible to prevent, for example, a small animal such as a cat from passing through the automatic door 32 and control only persons to pass through the automatic door 32. Alternatively, the following control may be adopted: only a target satisfying a predetermined reference shape passes through the automatic door 32 based on the shape of the break region.

As another example of applying such a gate apparatus, the automatic door 32 can be controlled not to be opened for safety. For example, it is assumed that a machine tool is disposed on the opposite side to the safety monitoring region 27 with respect to the automatic door 32. The gate apparatus includes a detection part detecting whether the

machine tool operates or stops to generate a detection signal. The detection part generates the detection signal based on a control signal of the machine tool or by recognizing the motion of the machine tool by the above object detection apparatus. Based on this detection signal, the gate apparatus does not permit the automatic door 32 to be opened when the machine tool is not stopped, and controls the automatic door 32 to be opened or closed based on the information of the characteristic amount memory 24 only when the machine tool is stopped. By such a control, the operator's safety is ensured.

[DETAILED IMAGE PROCESSING]

In relation to the image processing executed by the object detection apparatus 1, Figs. 12A and 12B show a flow of the image processing.

In the above description, the difference image is obtained by calculating the difference between the image taken at a first timing and the image taken at a second timing among the static images constituting the time-series images 33. Likewise, the camera part 6 taking the time-series images can take and store a background image 50 that is a static image of the safety monitoring region 27 in the same field of view as that in which the time-series images are obtained in advance (perform teaching of the background image), and generate a difference image 54 using the background image 50. A processing using such a background image 50 will be described below.

The difference between the background image 50 and the time-series image 33 for every pixel is calculated at a predetermined time interval, thereby generating a difference image 54 that is a group of time-series static images similarly to the description at step S10. Based on the difference image 54, it is possible to recognize whether or not a monitoring target object 37 is present in the safety monitoring region 27 (break detection in the step S11).

The brightness of each pixel of the difference image 54 is converted into binary data using a predetermined threshold value, thereby generating a binarized difference image 56. Fig. 13A shows an example of the binarized difference image. A dark region in the peripheral place of the field of view indicates a region where the monitoring target object 37 different from the background image 50 is not present. A white-and-black pattern at center of the field of view indicates a region where the monitoring target object 37 different from the background image 50 is present.

The break extraction image described at step S12 will be described in more detail. The break extraction image 35 is also referred to as "mask image 60" in the following description. Direction information indicating the direction corresponding to the pattern 29 projected by the projection part 4 is registered in the object detection apparatus 1 in advance. When the pattern 29 is, for example, the checkerboard pattern, the direction information indicates directions of horizontal and vertical lines of the checkerboard pattern.

A filling processing is performed on the binarized difference image 56 in a horizontal direction indicated in the direction information. As stated at the step S12, the filling processing is performed by a processing for inverting the frame sandwiched between frames of the same color as in the Othello (reversi) game. Fig. 13B shows an example of the horizontal mask image after this horizontal filling processing is performed. The filling processing is similarly performed on the horizontal mask image in the vertical direction indicated in the direction information, thereby obtaining the mask image 60. Fig. 13C shows an example of the mask image 60.

As described later, to easily acquire the information on the height of the object 37, the camera part 6 is preferably disposed at a displaced position from the protection part 4. In such an arrangement, a white pixel region in the mask image 60 includes the object 37 and a shade generated by causing the object 37 to cut off light beams from the projection part 4. To accurately obtain the information on the position and size of the object, it is preferable to exclude this shade region. This excluding processing (shade exclusion) will be described below.

Fig. 14A shows an example of the time-series image 33 at specific time. Fig. 14B shows the mask image 60 obtained from the time-series image 33 at the specific time. An image of a region corresponding to the time-series image 33 is buried into the white pixel region that is a region corresponding to the object 37 and the shade thereof in the mask image 60, thereby obtaining a mask extraction image 62 shown in Fig. 14C. The pattern 29 projected onto the object 37 and the shade of the object 37 appear in the break region of the mask extraction image 62.

The object detection apparatus 1 converts each pixel of the mask extraction image 62 into binary data using a predetermined threshold value, thereby generating a binarized mask extraction image 64. Furthermore, the object detection apparatus 1 generates a noise-removed mask extraction image 66. Fig. 15A shows an example of the noise-removed mask extraction image 66. This processing realizes shade-exclusion processing for excluding the shade of the object 37 (regions present on edges and having brightness equal to or lower than a predetermined value) generated on the edges in the negative x-axis direction of the break region.

By performing a horizontal filling processing on this mask extraction image 66 similarly to the horizontal mask image 58, a horizontal mask image 68 shown in Fig. 15B is obtained. By performing a vertical filling processing on the horizontal mask image 68 similarly to the mask image 60, a shade-excluded mask image 70 shown in Fig. 15C is obtained.

In the shade-excluded mask image 70, shade regions generated by the object 37 are removed and the region of the monitoring target object 37 is extracted as a white region. Due to this, the plane characteristic amount extraction

part 10 can recognize the position and the size of the object 37 in the horizontal plane without influence of the shade by using the shade-excluded mask image 70 as the break extraction image 35. For example, it is possible to approximately calculate the central position of the object 37 by calculating the center of both ends of the white region of the shade-excluded mask image 70 in the vertical and horizontal directions, respectively. Alternatively, it is possible to approximately calculate the moving speed of the object 37 in the horizontal plane by generating the time-series shade-excluded mask image 70 from the time-series difference image 54 and calculating a time-series central position.

Next, referring to Fig. 12B, the processing performed by the height characteristic amount processing part 13 will be described further. By burying an image of the background image 50 (Fig. 16A) of the corresponding region in the white region of the shade-excluded mask image 70 (exemplarily shown in Fig. 16B), a shade-excluded mask extraction image 72 of the background image is generated. By converting each pixel of the shade-excluded mask extraction image 72 into binary data using a predetermined threshold value, a binarized shade-excluded mask extraction image 74 (Fig. 16D) is obtained. By burying an image of the time-series image 33 (Fig. 16C) of the corresponding region in the white region of the shade-excluded mask image 70, a shade-excluded mask extraction image 78 of the time-series image is generated. By converting each pixel of the shade-excluded mask extraction image 76 into binary data using a predetermined threshold value, a binarized shade-excluded mask extraction image 78 (Fig. 16E) is obtained.

An image for measuring displacement [positive difference] 80 and an image for measuring displacement [negative difference] 82 are generated from the shade-excluded mask extraction images 74 and 78. Specifically, brightness values of the pixels of the shade-excluded mask extraction image 74 (Fig. 17A) of the background image 50 are subtracted from those of the corresponding pixels of the shade-excluded mask extraction image 78 (Fig 17B) of the time-series image 33, respectively, thereby generating the image for measuring displacement [positive difference] (Fig. 17C) is generated. Conversely, brightness values of the pixels of the shade-excluded mask extraction image 78 (Fig. 17B) of the time-series image 33 are subtracted from those of the corresponding pixels of the shade-excluded mask extraction image 74 (Fig 17A) of the background image 50, respectively, thereby generating the image for measuring displacement [negative difference] (Fig. 17D). When the calculation result is a negative value, the brightness value of the corresponding image for measuring displacement is set to 0 (black pixel).

Next, information obtained from the image for measuring displacement [positive difference] 80 and the image for measuring displacement [negative difference] 82 will be described. In the configuration of Fig. 1, this operation is executed by the height characteristic amount extraction part 13. Fig. 18 shows an example of an image obtained by taking an image of the safety monitoring region 27 in which an object 37 (entering object) is arranged from the camera part 6.

In the present embodiment, the projection part 4 and the camera part 6 are arranged in the ceiling and have optical axes vertically downward, respectively. The projection part 4 projects the enlarged pattern 29 at a predetermined angle with respect to this optical axis. It is assumed herein that the projection part 4 is arranged in the positive x-axis direction with respect to the camera part 6. That is, the optical axis of an optical system for causing the camera part 6 to take an image of the pattern 29 is displaced by a predetermined offset value in the x-axis direction with respect to the optical axis of the optical system for causing the projection part 4 to project the pattern 29. This offset is preferably set along a direction of the pattern 29. That is, in the present embodiment, the pattern 29 is the checkerboard pattern constituted by parallel lines in the x-axis and y-axis directions, the offset is set along the x-axis direction, and the optical axis of the projection part 4 and that of the camera part 6 are arranged at the same position in the y-axis direction. This setting can further facilitate the subsequent shade-exclusion processing and height information extraction processing.

The shade of the object 37 is generated in the negative x-axis direction. Furthermore, the pattern 29 projected onto the upper surface of the object 37 is displaced in the positive x-axis direction from the pattern 29 projected onto the floor surface by a displacement amount according to the height of the object 37.

In a case where the projection part 4 projects the pattern 29 radially from one point, the pattern 29 has a same solid angle on the floor surface and the upper surface of the object 37. Due to this, if the pattern 29 it projected onto a surface in parallel to the floor surface, respective regions of the pattern 29 taken by the camera part 6 have a same size even if the height differs. Accordingly, a repetitive pattern of the same shape and same size is projected onto the floor surface and the upper surface of the object 37 to be displaced from each other in the x-axis direction.

Because of this displacement amount, the position of the pattern 29 is displaced in the x-axis direction between a case where the object 37 is present and a case where the object 37 is not present. The magnitude of the displacement amount depends on the height of the object 37. Due to this, by measuring this displacement amount, the information on the height of the object 37 can be extracted. The images for measuring displacement 80 and 82 represent a pattern displacement between the background image 50 and the time-series image 33 in the region where the object 37 appears. The image for measuring displacement [positive difference] 80 represents the displacement of the pattern 29 in white regions (high brightness regions, regions each having the first optical characteristic amount). The image for measuring displacement [negative difference] 82 represents the displacement of the pattern 29 in black regions (low brightness regions, regions each having a second optical characteristic amount). The height information can be extracted using only one of the images for measuring displacement 80 and 82. By using both of the images for measuring displacement

80 and 82, the height information on the object 37 can be extracted with relatively high resolution even in a case where the pattern has a long period.

The projection part 4 preferably projects the pattern 29 so that the white regions and black regions forming the pattern 29 are identical in a solid angle respectively. With such a pattern 29, the position, the height, the shape and the like can be calculated by simpler calculation.

By identifying a pattern in which a displacement (breaking) occurs, the magnitude, the shape, and the central position can be approximately obtained from information on the corresponding flow surface pattern (position and magnitude thereof). By adopting such a processing, it is possible to identify the magnitude and the position of the detection target object more easily than a method of processing a complicatedly deformed shape of break due to the presence of the object 37. Therefore, this method is preferable in a case where high detection accuracy is not required.

Figs . 19A and 19B are diagrams for explaining the images for measuring displacement 80 and 82. Figs. 19A and 19B relate to the image for measuring displacement [positive difference] 80 and the image for measuring displacement [negative difference] 82, respectively. In each of Figs. 19A and 19B, the uppermost row indicates the pattern 29 projected onto the floor surface. Second and following rows indicate the pattern 29 projected onto the upper surface of the object 37 when the distance from the sensor (camera part 6) to the upper surface of the object 37 is a predetermined value. A lower row indicates that the distance from.the senior is narrower, that is, the height from the floor surface is larger. The slash part indicates each white region in each of the images for measuring displacement [positive difference] 80 and 82. As shown in Figs. 19A and 19B, the height from the floor surface is larger as the displacement amount is grater. Since the displacement amount of the pattern 29 can be recognized from the images for measuring displacement 80 and 82, the height of the object 37 can be calculated based on the displacement amount.

Fig. 20 is a diagram for explaining a method of calculating the height of the object 37 based on the displacement amount of the pattern 29. A point B indicates the position of the projection part 4. A point C indicates the position of a lens (sensor) of the camera part 6 or indicates the position corresponding to a pinhole in an optical system of a pinhole camera. It is assumed that the heights of the points B and C from the floor surface are equal and that the distance between the points B and C in the horizontal plane is D. It is assumed that the distance from the point C to the image plane in which an image is created in the camera 6 is $f_x$. It is assumed that the distance between the projection part 4 or the camera part 6 and the floor surface is $H_B$. This distance $H_B$ is registered in a storage device of the object detection apparatus 1 in advance. It is assumed that the distance from the floor surface to the upper surface of the object 37 is h. The distance between the upper surface of the object 37 and the sensor is $Z=H_B-h$.

The projection part 4 projects the pattern 29 from the point B in the direction of the floor surface. It is assumed that the position where a predetermined region of this pattern 29 is to be projected onto the floor surface if the object 37 is not present is a point A. It is assumed that the magnitude of the displacement of the pattern 29 in the image plane of the camera part 6 (detected from the images for measuring displacement 80 and 82) due to projection of this pattern 29 onto the upper surface of the object 37 is $S_P$. It is assumed that the magnitude of the actual displacement of the pattern 29 on the upper surface of the object 37 causing the $S_P$ (magnitude of the displacement of the predetermined region of the pattern 29 between the instance in which the object 37 is present and that in which the object 37 is not present) is S. The following Equation (1) is held by the principle of the pinhole camera model.

$$S_p = f_X \frac{S}{Z}$$
$$\Leftrightarrow S = \frac{S_p}{f_X} Z = \frac{S_p (H_B - h)}{f_X}$$
$$(\because Z = H_B - h) \qquad \cdots (1)$$

Meanwhile, regarding the triangle ABC, the following Equation (2) is held from the relationship of the triangle and the parallel line.

$$S = \frac{Dh}{H_B} \qquad \cdots (2)$$

Based on the Equations (1) and (2), the height of the object from the floor surface is obtained by the following Equation (3).

$$h = \frac{S_p H_B^{\ 2}}{f_X D + S_p H_B} \quad \cdots (3)$$

The object detection apparatus 1 can easily calculate the height of the object 37 by such calculation.

As explained above, the displacement amount of the pattern 29 is decided corresponding to the distance from the sensor to the upper surface of the object 37. Therefore, by storing a predetermined program in the object detection apparatus 1, it is possible to calculate even information indicating the inclination angle of the upper surface of the object 37 and the moving speed of the upper surface of the object 37 in the height direction.

## Claims

**1.** A gate apparatus comprising:

a projection part configured to project a repetitive pattern in which a first region having a first optical characteristic amount and a second region having a second optical characteristic amount are alternately arranged to a monitoring target region;
an image taking part configured to take an image of the monitoring target region;
a break extraction part configured to extract a break region which is a region in which a first image taken by the image taking part at a first time and a second image taken by the image taking part at a second time are different from each other;
a characteristic amount extraction part configured to extract a predetermined characteristic amount of the break region; and
a gate control part configured to control opening and closing of a gate based on the predetermined characteristic amount.

**2.** The gate apparatus according to claim 1, wherein the characteristic amount extraction part has an area calculation part configured to calculate an area of the break region, and
the area calculation part is configured to calculate a count number which is obtained by counting at.least one of the first region or the second region included in the break region as the area.

**3.** The gate apparatus according to claim 1 or 2, wherein the image taking part is installed on a ceiling such that a field of view of the image taking part is directed downward, and
the gate is configured to block a passage between a side of the monitoring target region and a side opposite to the monitoring target region from the gate.

**4.** The gate apparatus according to any of claims 1 to 3, wherein the break extraction part is configured to generate a difference image in which a deformed repetitive pattern which is a pattern being deformed from the repetitive pattern is included in the break region, and extract the break region as a filled-in region by converting an optical characteristic amount of the second region which is pinched by the first region in the deformed repetitive pattern into the first optical characteristic amount, and
the gate control part is configured to control the opening and closing of the gate based on a time-serial movement of the filled-in region.

**5.** The gate apparatus according to any of claims 1 to 3, wherein the break extraction part is configured to generate a difference image in which a deformed repetitive pattern which is a pattern being deformed from the repetitive pattern is included in the break region by calculating a difference between the first image and the second image,
the characteristic amount extraction part further comprises a height information calculation part configured to calculate a height of an object existing in the break region as height information based on the deformed repetitive pattern, and
the gate control part is configured to control the opening and closing of the gate based on the height information.

6. The gate apparatus according to any of claims 1 to 3, wherein the projection part is configured to project the repetitive pattern such that the first region and the second region are periodically arranged in a first direction and a second direction, and
an optical axis of the image taking part for taking an image of the monitoring target region is arranged to be deviated from an optical axis of an optical system of the projection part for projecting the repetitive pattern by a predetermined offset value in the first direction, and arranged in a same position with the optical axis of the optical system in the second direction.

7. The gate apparatus according to claim 6, wherein the characteristic amount extraction part further comprises a height information calculation part configured to calculate a height of an upper surface of an object existing in the monitoring target region as height information based on a magnitude of deviation of the repetitive pattern projected on the object from the repetitive pattern projected on a background surface of the monitoring target region in the first direction, and
the gate control part is configured to control the opening and closing of the gate based on the height information.

8. The gate apparatus according to claim 6 or 7, wherein the break extraction part is configured to execute a shade exclusion process by which a region of the break region at an edge in the first direction whose luminance is equal to or lower than a predetermined value is excluded from the break region.

9. The gate apparatus according to any of claims 1 to 8, wherein the repetitive pattern is formed by irradiating an infrared ray to the first region and not irradiating an infrared ray to the second region.

10. The gate apparatus according to any of claims 1 to 9, wherein the break extraction part is configured to extract a second break region being a region in which the second image and a third image taken at a third time are different from each other,
the characteristic amount extraction part further comprises a movement direction detection part configured to detect a direction of a movement of an object existing in the monitoring target region based on a position of the break region and a position of the second break region, and
the gate control part is configured to control the opening and closing of the gate based on the direction of the movement.

11. The gate apparatus according to any of claims 1 to 10, wherein the gate control part is configured to control the opening and closing of the gate based on a shape of the break region.

12. The gate apparatus according to any of claims 1 to 11, wherein the characteristic amount extraction part further comprises a stay time monitoring part configured to monitor a stay time during which an object indicated by the break region stays in the monitoring target region.

13. The gate apparatus according to any of claims 1 to 12, wherein an image of the monitoring target region taken by the image taking part is converted into a binary image by a first threshold value being' near the first optical characteristic amount and a second threshold value being near the second optical characteristic amount.

14. An object detection apparatus comprising:

a projection part configured to project a repetitive pattern in which a first region having a first optical characteristic amount and a second region having a second optical characteristic amount are alternately arranged to a monitoring target region;
an image taking part configured to take an image of the monitoring target region;
a break extraction part configured to extract a break region which is a region in which a first image taken by the image taking part at a first time and a second image taken by the image taking part at a second time are different from each other; and
a characteristic amount extraction part configured to extract a predetermined characteristic amount of the break region.

15. The object detection apparatus according to claim 14, wherein the break extraction part is configured to generate a difference image in which a deformed repetitive pattern which is a pattern being deformed from the repetitive pattern is included in the break region, and extract the break region as a filled-in region by converting an optical characteristic amount of the second region which is pinched by the first region in the deformed repetitive pattern

into the first optical characteristic amount.

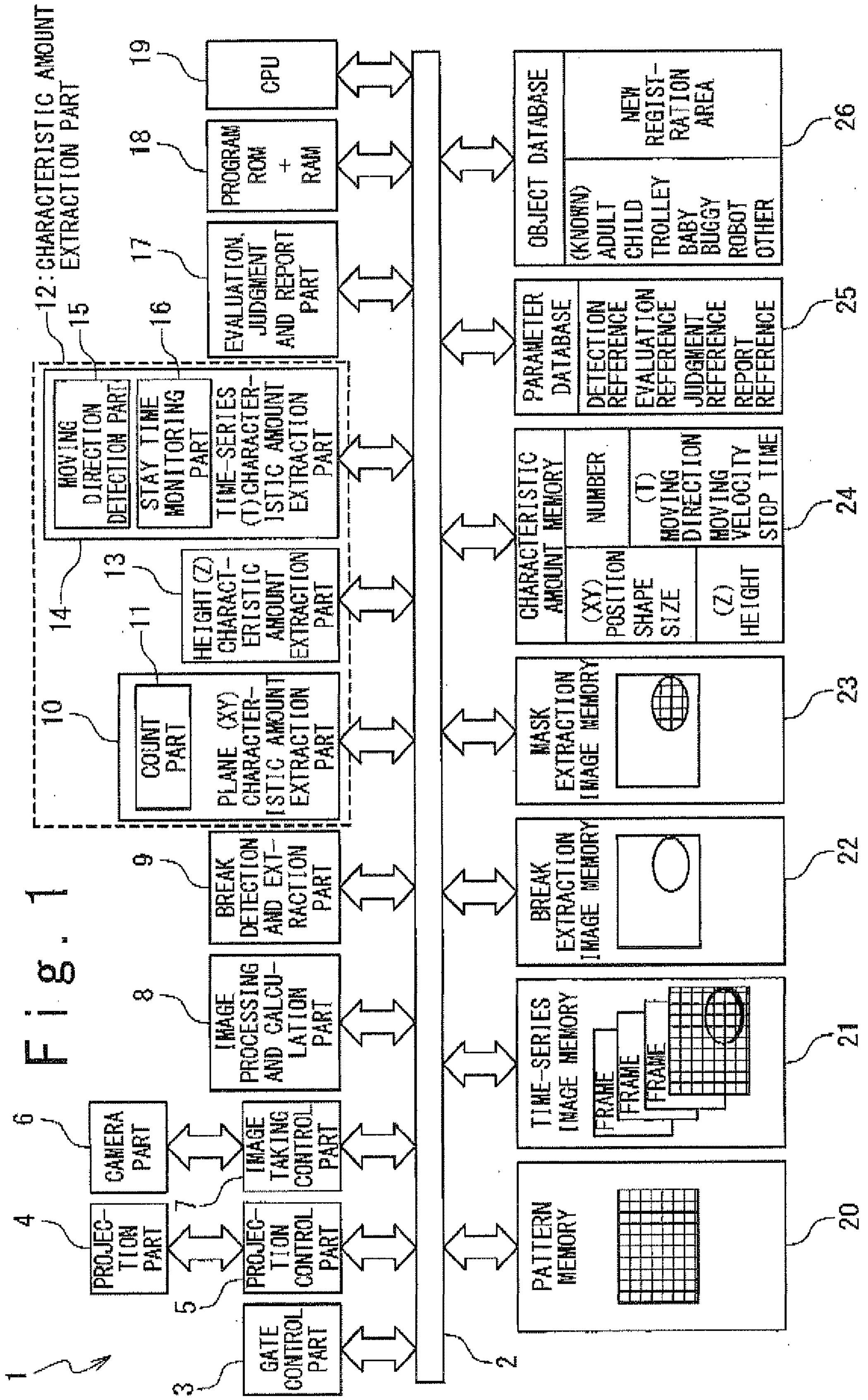
12: CHARACTERISTIC AMOUNT EXTRACTION PART
CPU
PROGRAM ROM + RAM
EVALUATION, JUDGMENT AND REPORT PART
MOVING DIRECTION DETECTION PART
STAY TIME MONITORING PART
TIME-SERIES (T) CHARACTERISTIC AMOUNT EXTRACTION PART
HEIGHT (Z) CHARACTERISTIC AMOUNT EXTRACTION PART
COUNT PART
PLANE (XY) CHARACTERISTIC AMOUNT EXTRACTION PART
BREAK DETECTION AND EXTRACTION PART
IMAGE PROCESSING AND CALCULATION PART
CAMERA PART
IMAGE TAKING CONTROL PART
PROJECTION PART
PROJECTION CONTROL PART
GATE CONTROL PART
OBJECT DATABASE
(KNOWN) ADULT CHILD TROLLEY BABY BUGGY ROBOT OTHER
NEW REGISTRATION AREA
PARAMETER DATABASE
DETECTION REFERENCE
EVALUATION REFERENCE
JUDGMENT REFERENCE
REPORT REFERENCE
CHARACTERISTIC AMOUNT MEMORY
(XY) POSITION SHAPE SIZE
(Z) HEIGHT
NUMBER
(T) MOVING DIRECTION MOVING VELOCITY STOP TIME
MASK EXTRACTION IMAGE MEMORY
BREAK EXTRACTION IMAGE MEMORY
TIME-SERIES IMAGE MEMORY
FRAME
FRAME
FRAME
PATTERN MEMORY
1 2 3 4 5 6 7 8 9 10 11 13 14 15 16 17 18 19 20 21 22 23 24 25 26

Fig. 1

# Fig. 2

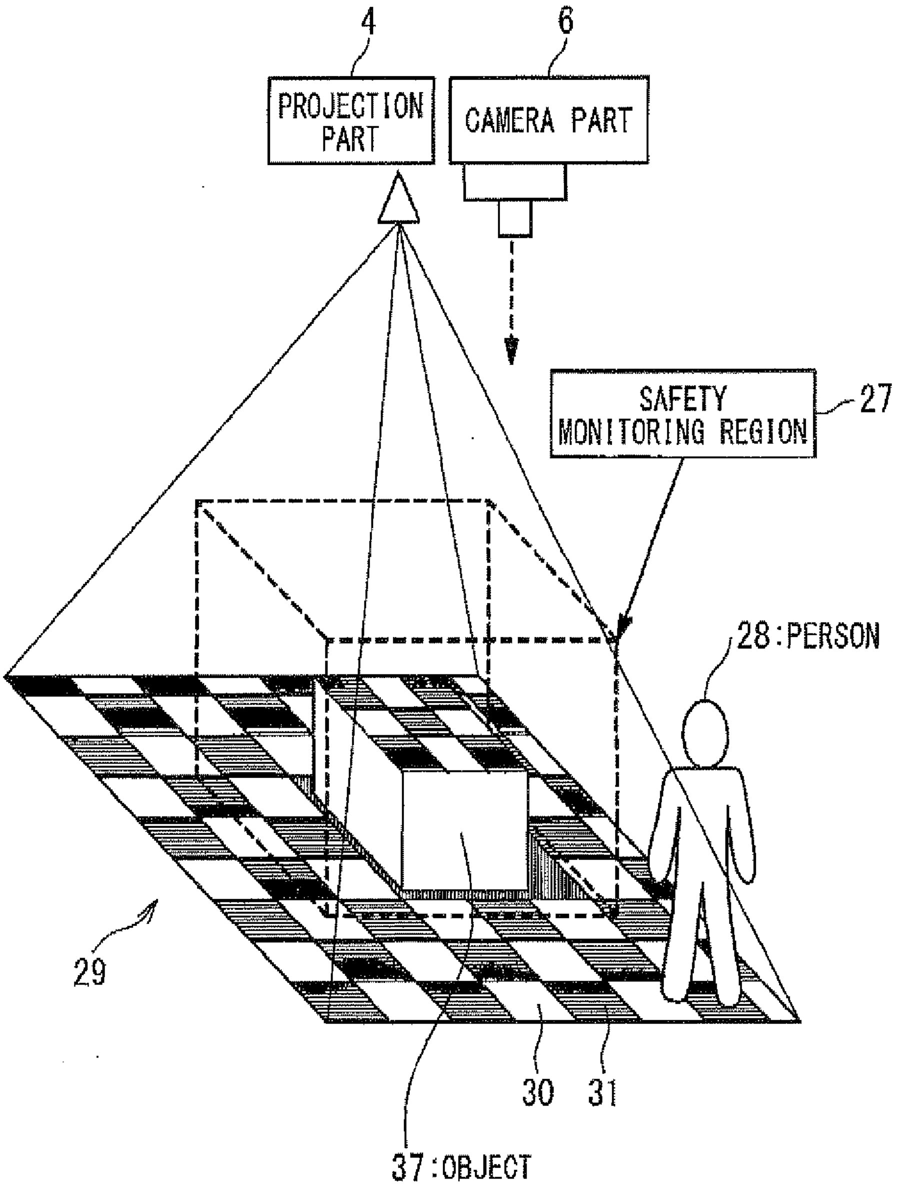
4
6
PROJECTION PART
CAMERA PART
SAFETY MONITORING REGION
27
28:PERSON
29
30
31
37:OBJECT

Fig. 3

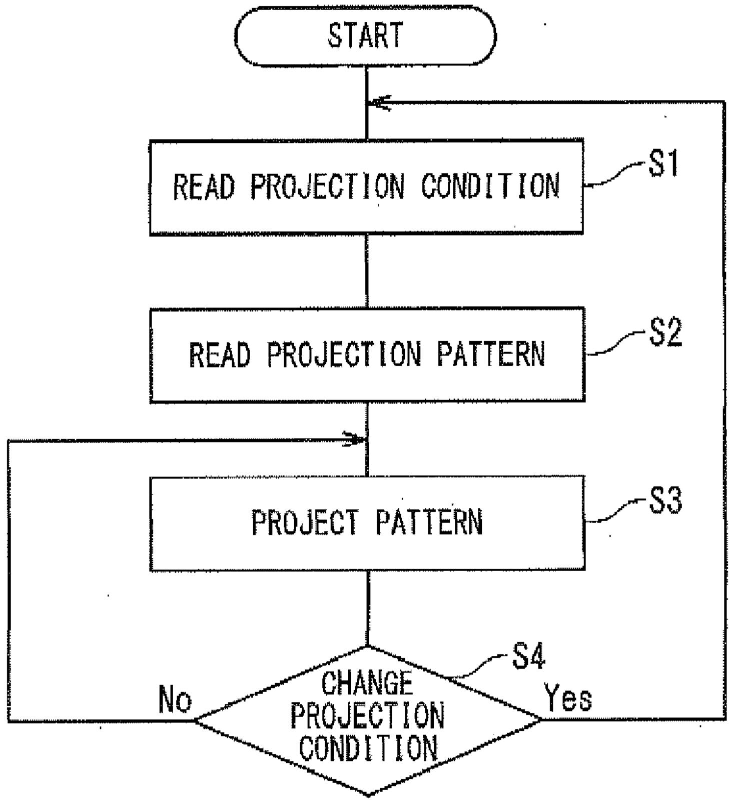
START
READ PROJECTION CONDITION
S1
READ PROJECTION PATTERN
S2
PROJECT PATTERN
S3
CHANGE PROJECTION CONDITION
S4
No
Yes

Fig. 4

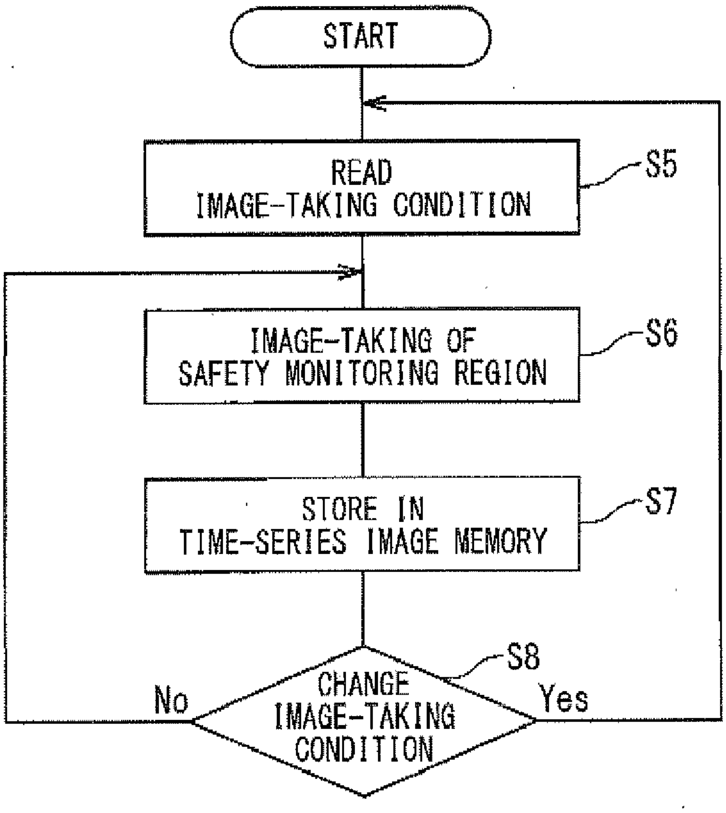
START
READ
IMAGE-TAKING CONDITION
S5
IMAGE-TAKING OF
SAFETY MONITORING REGION
S6
STORE IN
TIME-SERIES IMAGE MEMORY
S7
S8
CHANGE
IMAGE-TAKING
CONDITION
No
Yes

Fig. 5

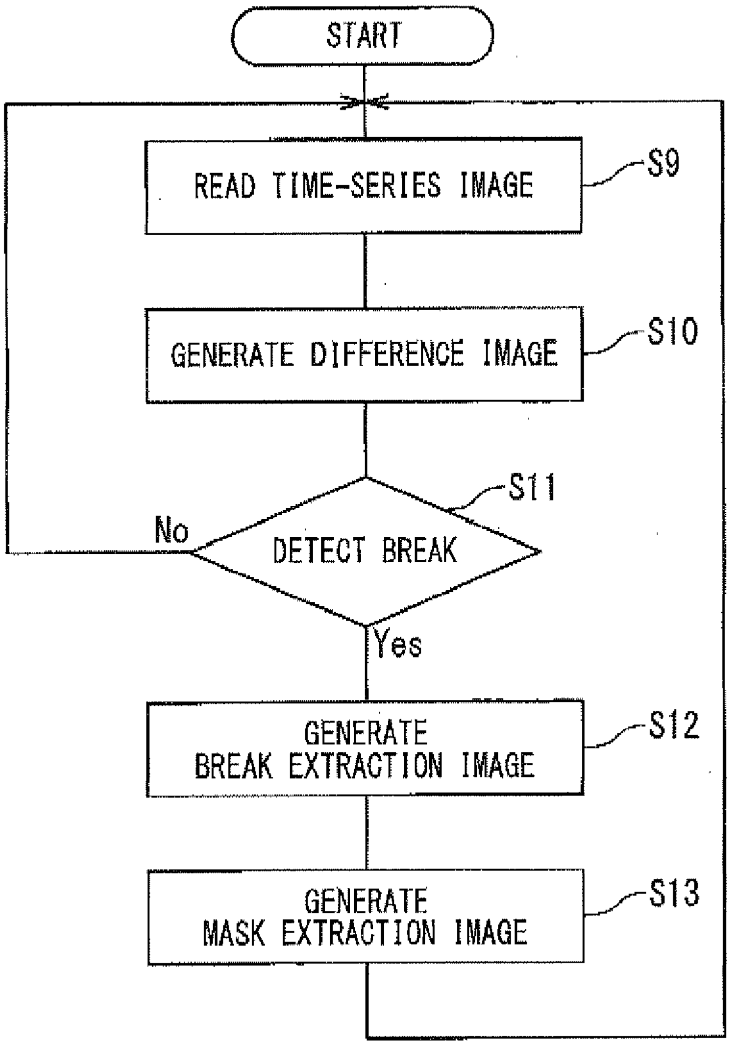
START
READ TIME-SERIES IMAGE
S9
GENERATE DIFFERENCE IMAGE
S10
DETECT BREAK
S11
No
Yes
GENERATE
BREAK EXTRACTION IMAGE
S12
GENERATE
MASK EXTRACTION IMAGE
S13

Fig. 6

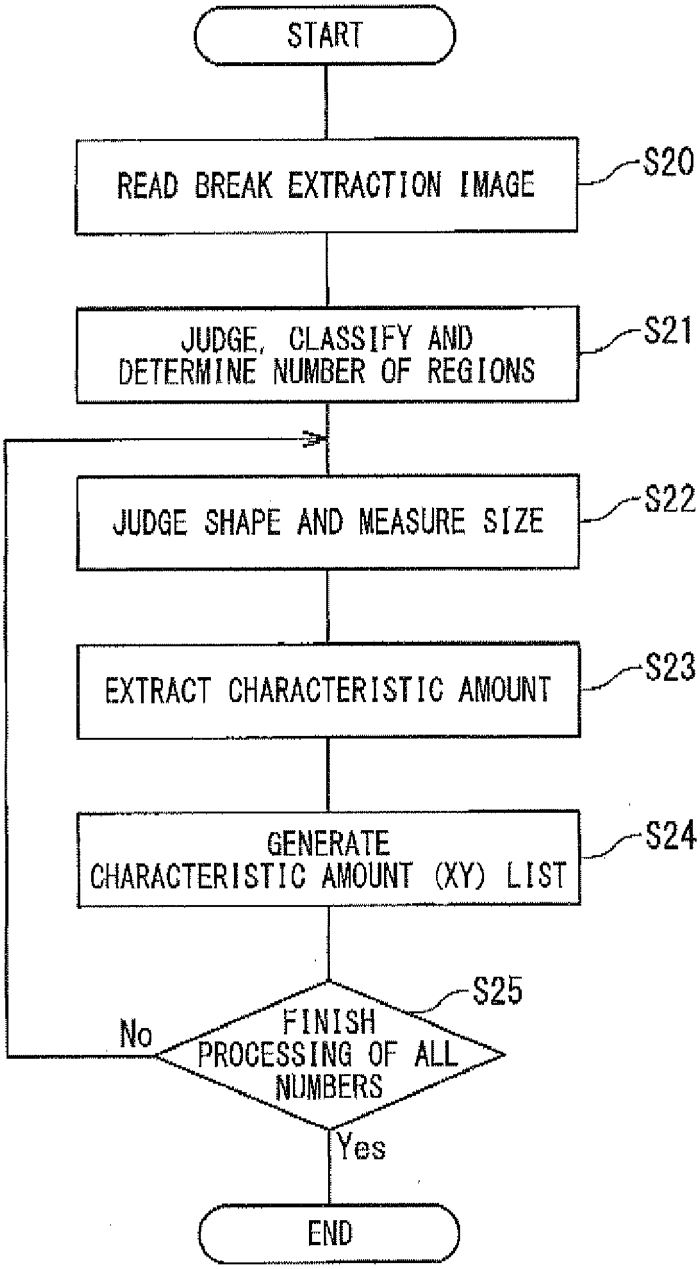
START
READ BREAK EXTRACTION IMAGE
S20
JUDGE, CLASSIFY AND DETERMINE NUMBER OF REGIONS
S21
JUDGE SHAPE AND MEASURE SIZE
S22
EXTRACT CHARACTERISTIC AMOUNT
S23
GENERATE CHARACTERISTIC AMOUNT (XY) LIST
S24
FINISH PROCESSING OF ALL NUMBERS
S25
No
Yes
END

Fig. 7

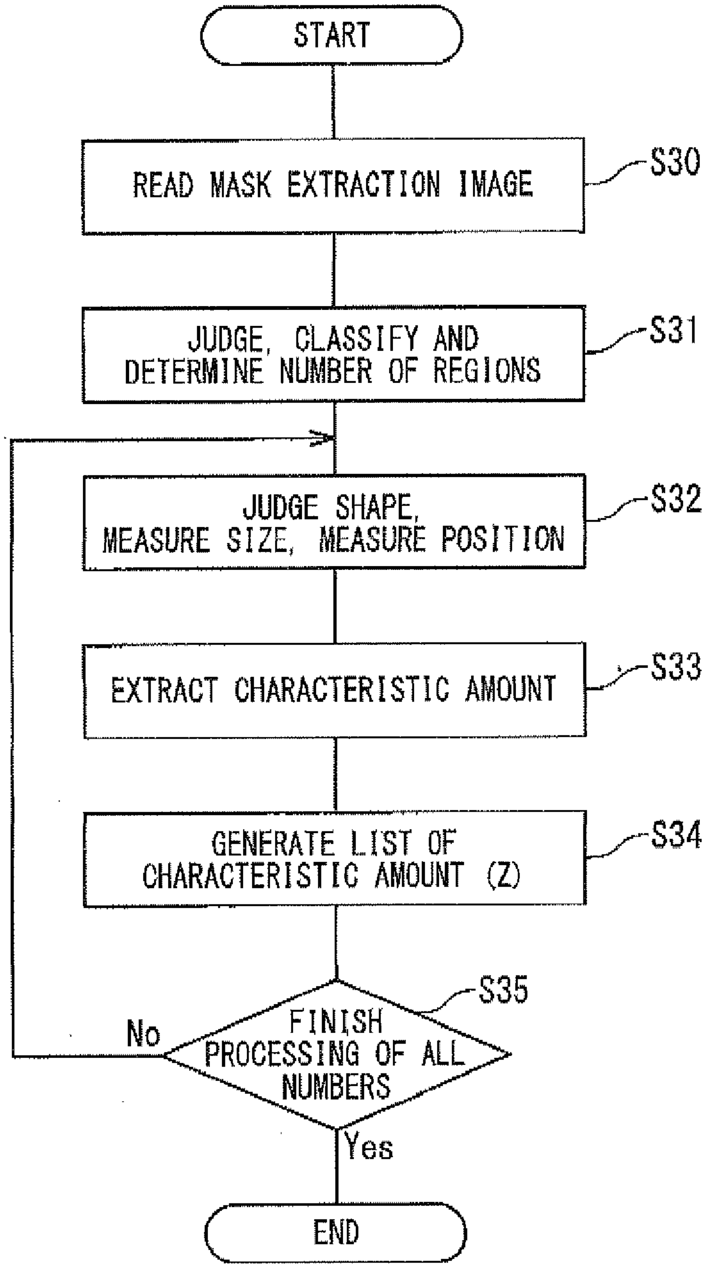
START
READ MASK EXTRACTION IMAGE
S30
JUDGE, CLASSIFY AND DETERMINE NUMBER OF REGIONS
S31
JUDGE SHAPE, MEASURE SIZE, MEASURE POSITION
S32
EXTRACT CHARACTERISTIC AMOUNT
S33
GENERATE LIST OF CHARACTERISTIC AMOUNT (Z)
S34
FINISH PROCESSING OF ALL NUMBERS
S35
No
Yes
END

Fig. 8

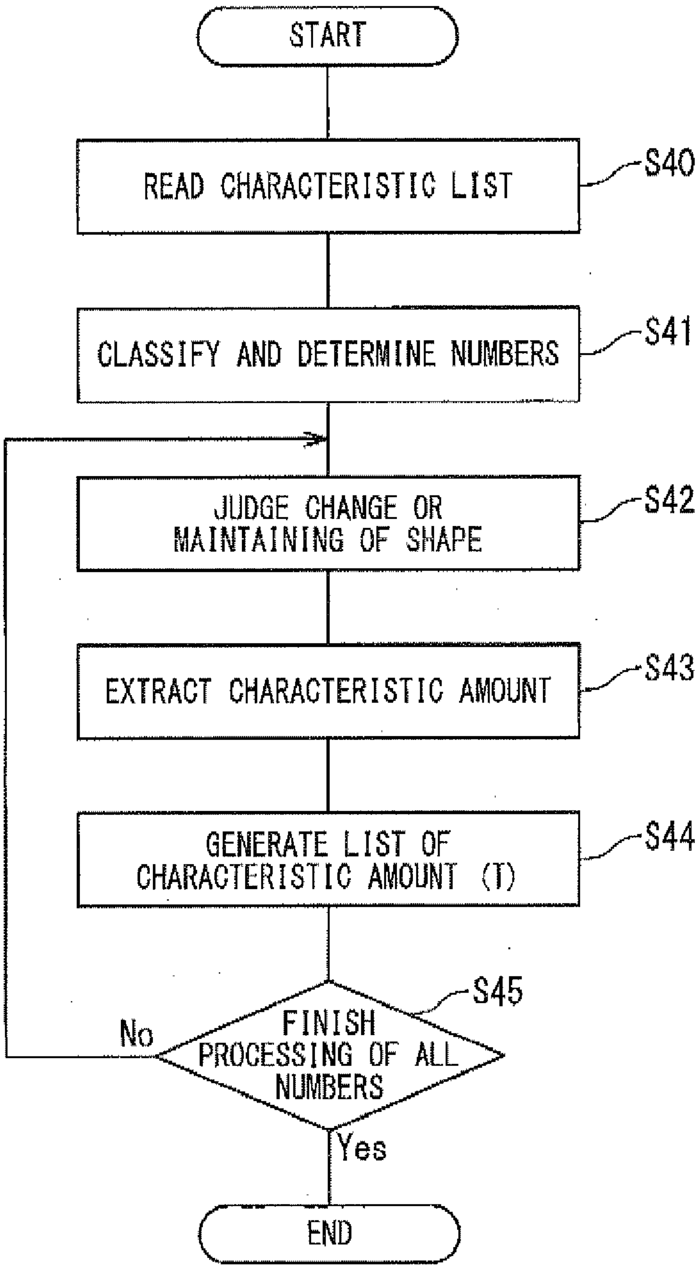
START
READ CHARACTERISTIC LIST
S40
CLASSIFY AND DETERMINE NUMBERS
S41
JUDGE CHANGE OR MAINTAINING OF SHAPE
S42
EXTRACT CHARACTERISTIC AMOUNT
S43
GENERATE LIST OF CHARACTERISTIC AMOUNT (T)
S44
FINISH PROCESSING OF ALL NUMBERS
S45
No
Yes
END

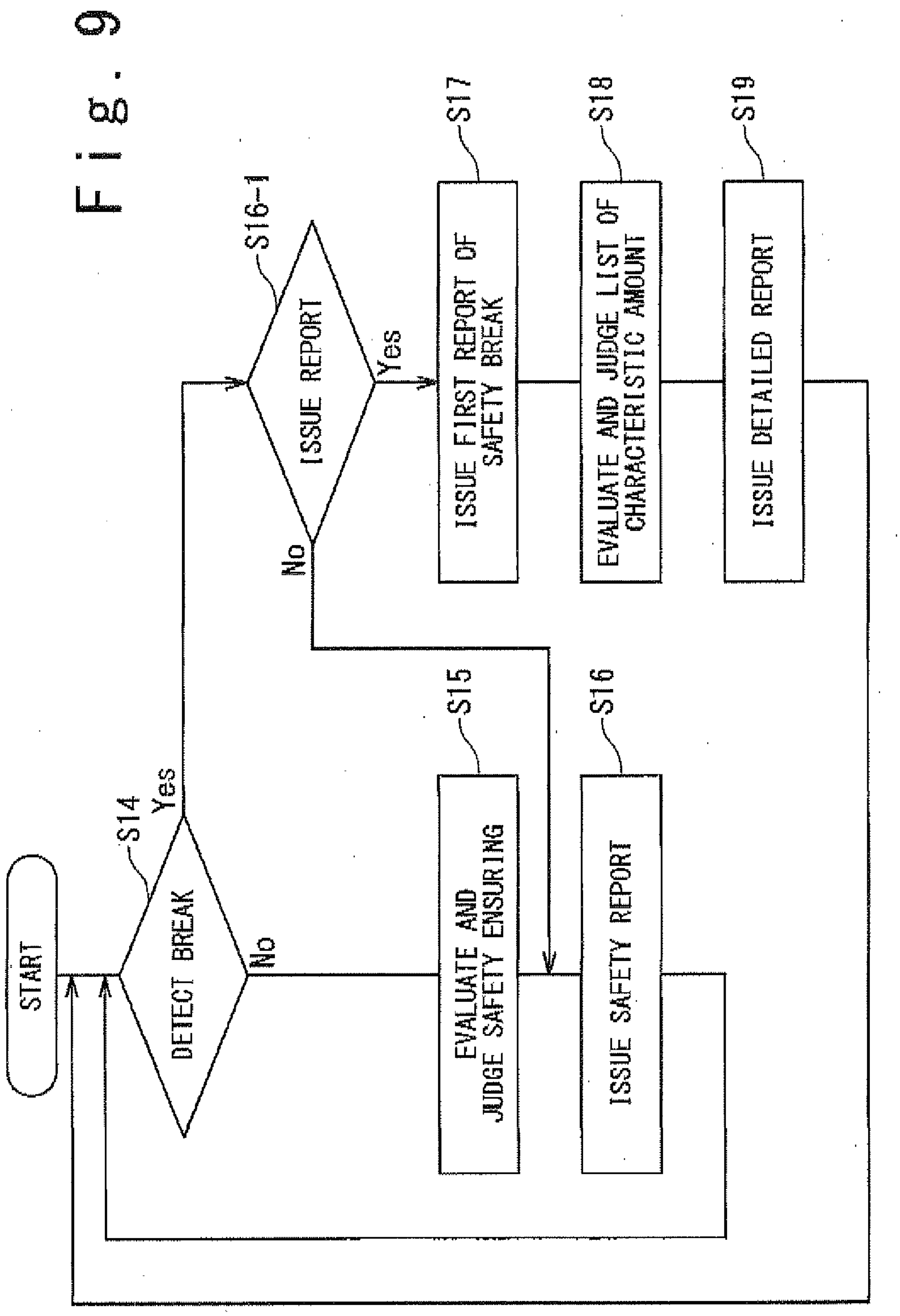
START
DETECT BREAK
S14
Yes
No
EVALUATE AND JUDGE SAFETY ENSURING
S15
ISSUE SAFETY REPORT
S16
ISSUE REPORT
S16-1
Yes
No
ISSUE FIRST REPORT OF SAFETY BREAK
S17
EVALUATE AND JUDGE LIST OF CHARACTERISTIC AMOUNT
S18
ISSUE DETAILED REPORT
S19

Fig. 9

Fig. 10

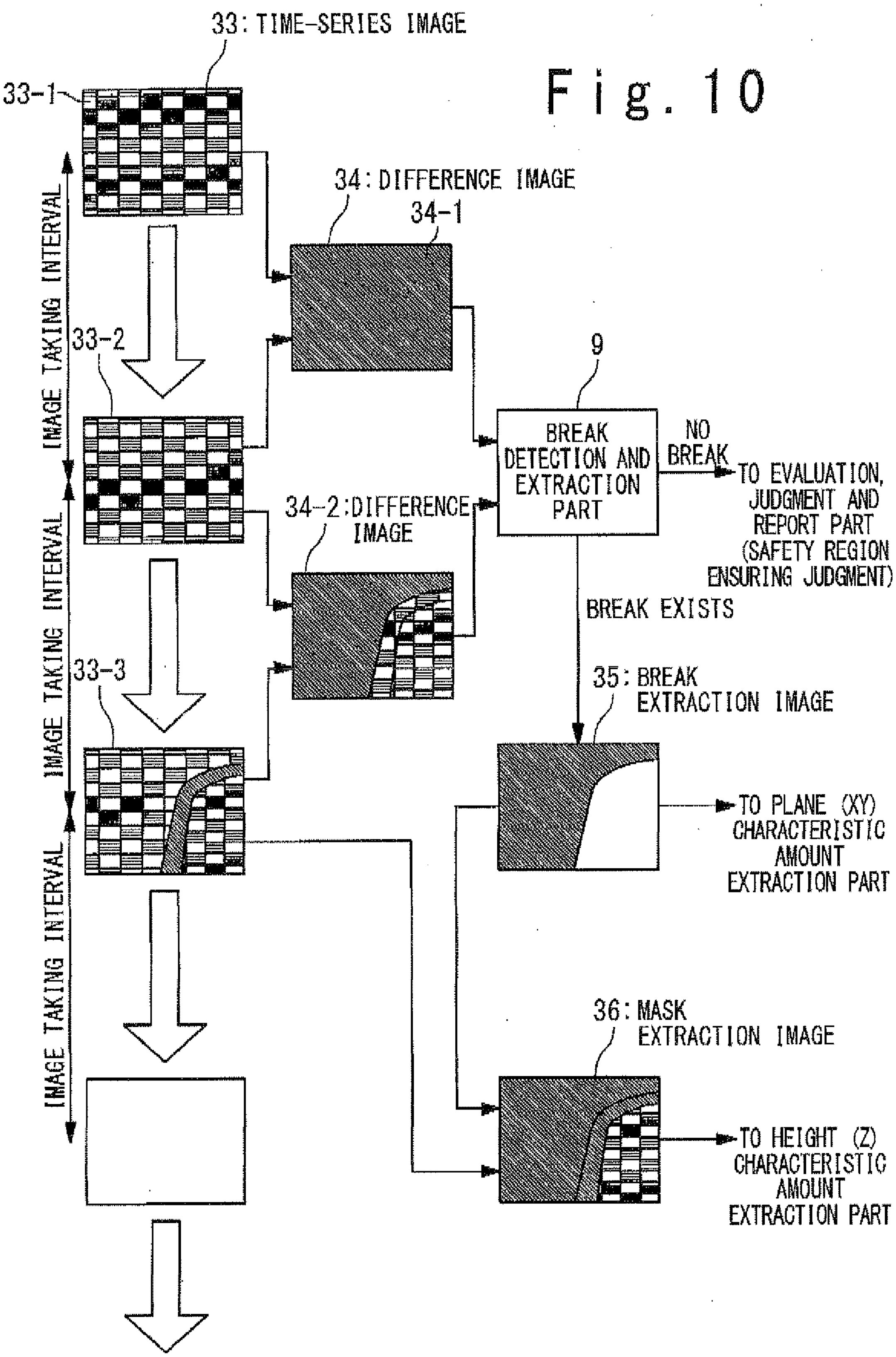
33: TIME-SERIES IMAGE
33-1
34: DIFFERENCE IMAGE
34-1
IMAGE TAKING INTERVAL
33-2
9
BREAK DETECTION AND EXTRACTION PART
NO BREAK
TO EVALUATION, JUDGMENT AND REPORT PART (SAFETY REGION ENSURING JUDGMENT)
34-2: DIFFERENCE IMAGE
IMAGE TAKING INTERVAL
BREAK EXISTS
33-3
35: BREAK EXTRACTION IMAGE
TO PLANE (XY) CHARACTERISTIC AMOUNT EXTRACTION PART
IMAGE TAKING INTERVAL
36: MASK EXTRACTION IMAGE
TO HEIGHT (Z) CHARACTERISTIC AMOUNT EXTRACTION PART

Fig. 11

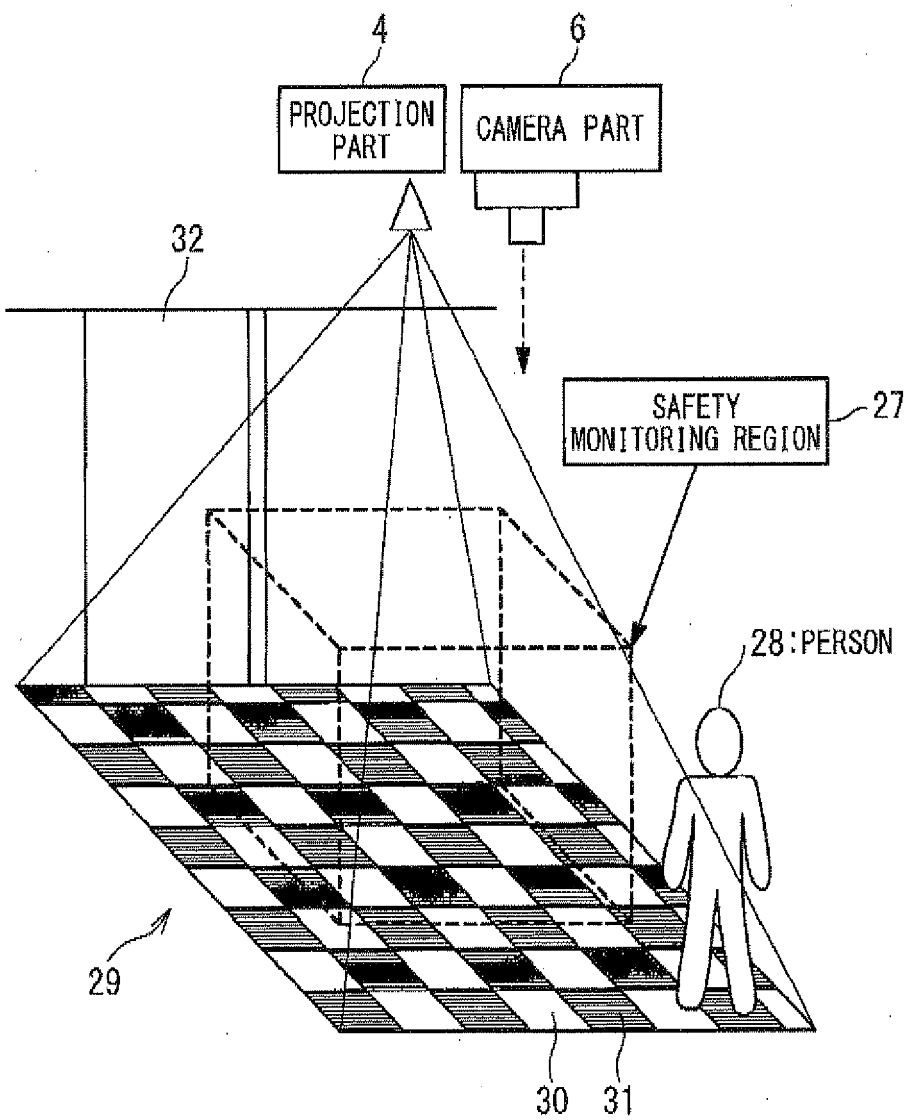
4
6
PROJECTION PART
CAMERA PART
32
SAFETY MONITORING REGION
27
28:PERSON
29
30
31

Fig. 12A

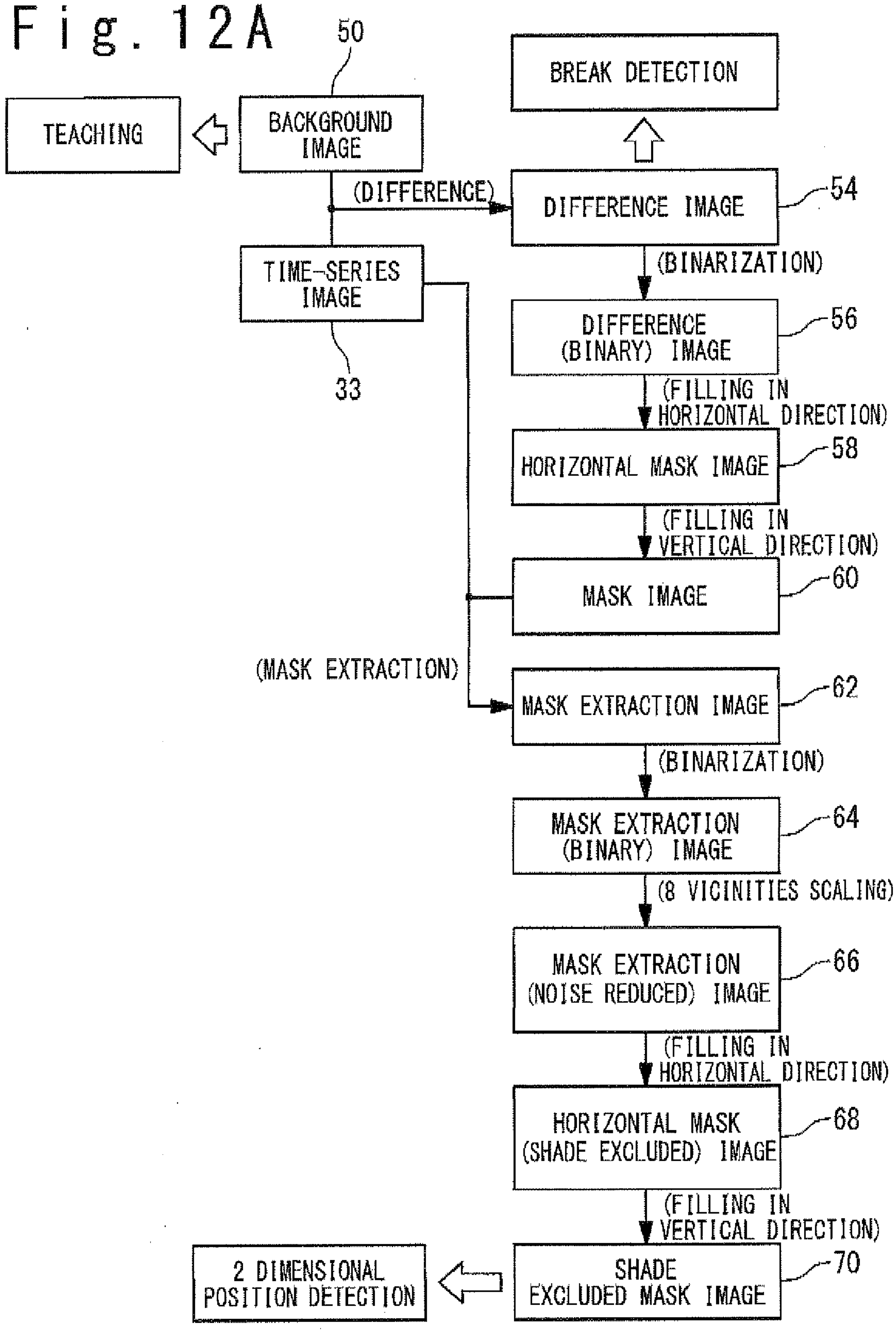
50
TEACHING
BACKGROUND IMAGE
BREAK DETECTION
(DIFFERENCE)
DIFFERENCE IMAGE
54
TIME-SERIES IMAGE
33
(BINARIZATION)
DIFFERENCE (BINARY) IMAGE
56
(FILLING IN HORIZONTAL DIRECTION)
HORIZONTAL MASK IMAGE
58
(FILLING IN VERTICAL DIRECTION)
MASK IMAGE
60
(MASK EXTRACTION)
MASK EXTRACTION IMAGE
62
(BINARIZATION)
MASK EXTRACTION (BINARY) IMAGE
64
(8 VICINITIES SCALING)
MASK EXTRACTION (NOISE REDUCED) IMAGE
66
(FILLING IN HORIZONTAL DIRECTION)
HORIZONTAL MASK (SHADE EXCLUDED) IMAGE
68
(FILLING IN VERTICAL DIRECTION)
2 DIMENSIONAL POSITION DETECTION
SHADE EXCLUDED MASK IMAGE
70

Fig. 12B

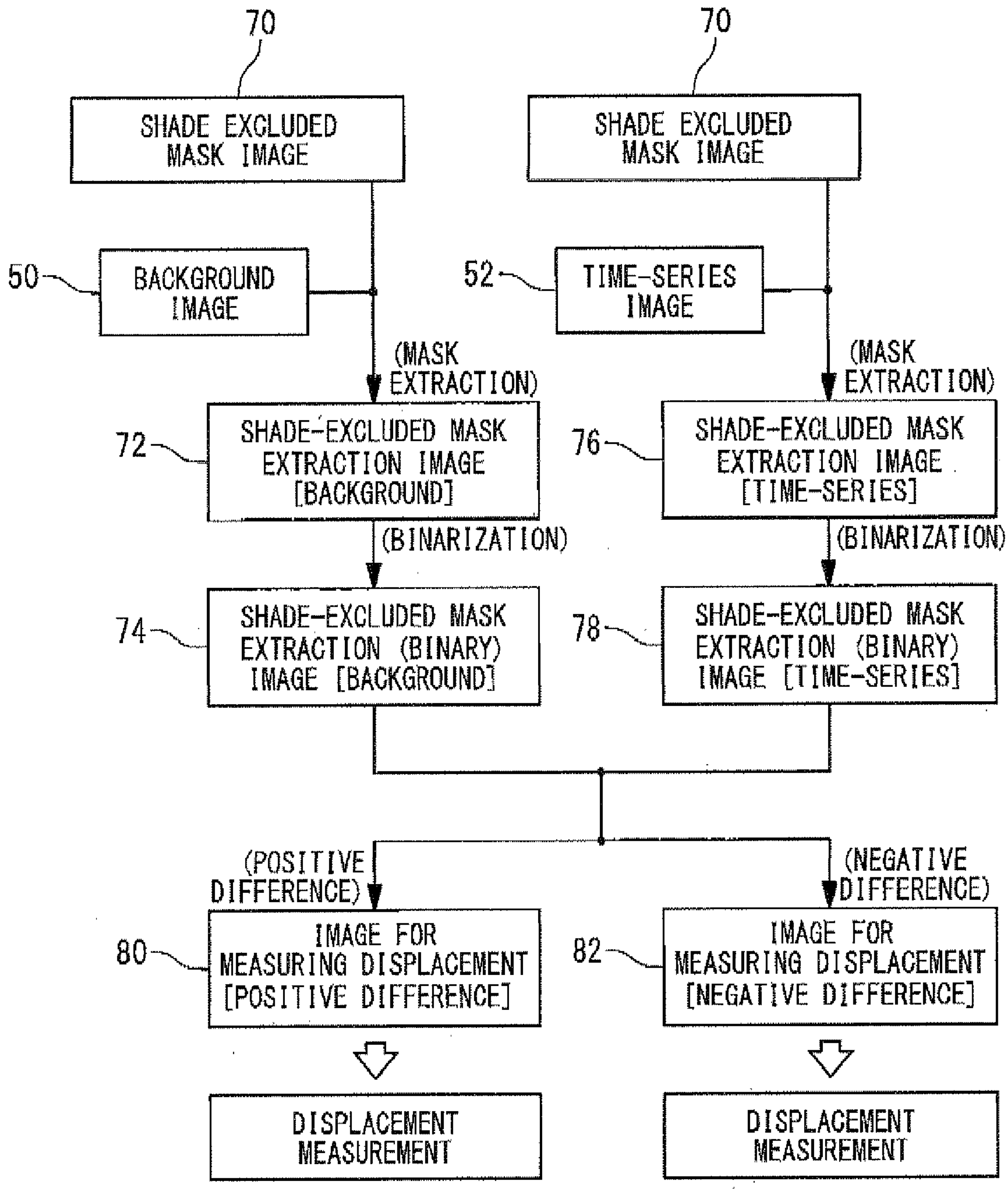
70
SHADE EXCLUDED MASK IMAGE
70
SHADE EXCLUDED MASK IMAGE
50
BACKGROUND IMAGE
52
TIME-SERIES IMAGE
(MASK EXTRACTION)
(MASK EXTRACTION)
72
SHADE-EXCLUDED MASK EXTRACTION IMAGE [BACKGROUND]
76
SHADE-EXCLUDED MASK EXTRACTION IMAGE [TIME-SERIES]
(BINARIZATION)
(BINARIZATION)
74
SHADE-EXCLUDED MASK EXTRACTION (BINARY) IMAGE [BACKGROUND]
78
SHADE-EXCLUDED MASK EXTRACTION (BINARY) IMAGE [TIME-SERIES]
(POSITIVE DIFFERENCE)
(NEGATIVE DIFFERENCE)
80
IMAGE FOR MEASURING DISPLACEMENT [POSITIVE DIFFERENCE]
82
IMAGE FOR MEASURING DISPLACEMENT [NEGATIVE DIFFERENCE]
DISPLACEMENT MEASUREMENT
DISPLACEMENT MEASUREMENT

Fig. 13A

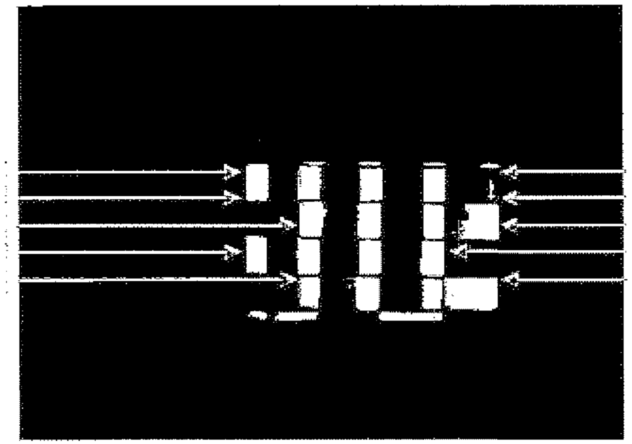

BINARIZED DIFFERENCE IMAGE

Fig. 13B

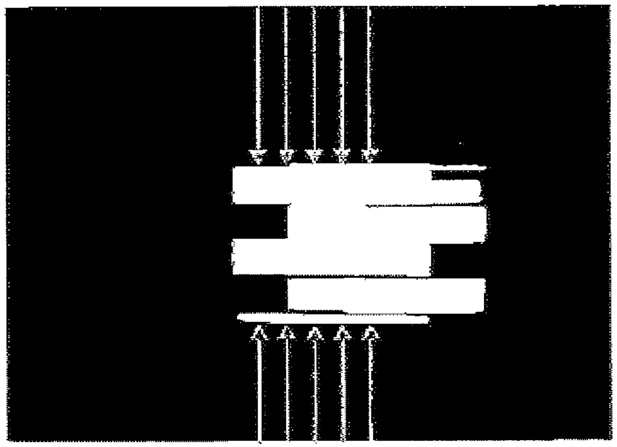

HORIZONTAL MASK IMAGE

Fig. 13C

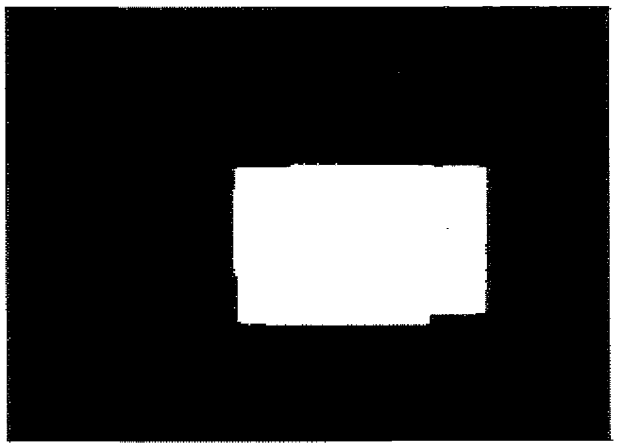

MASK IMAGE

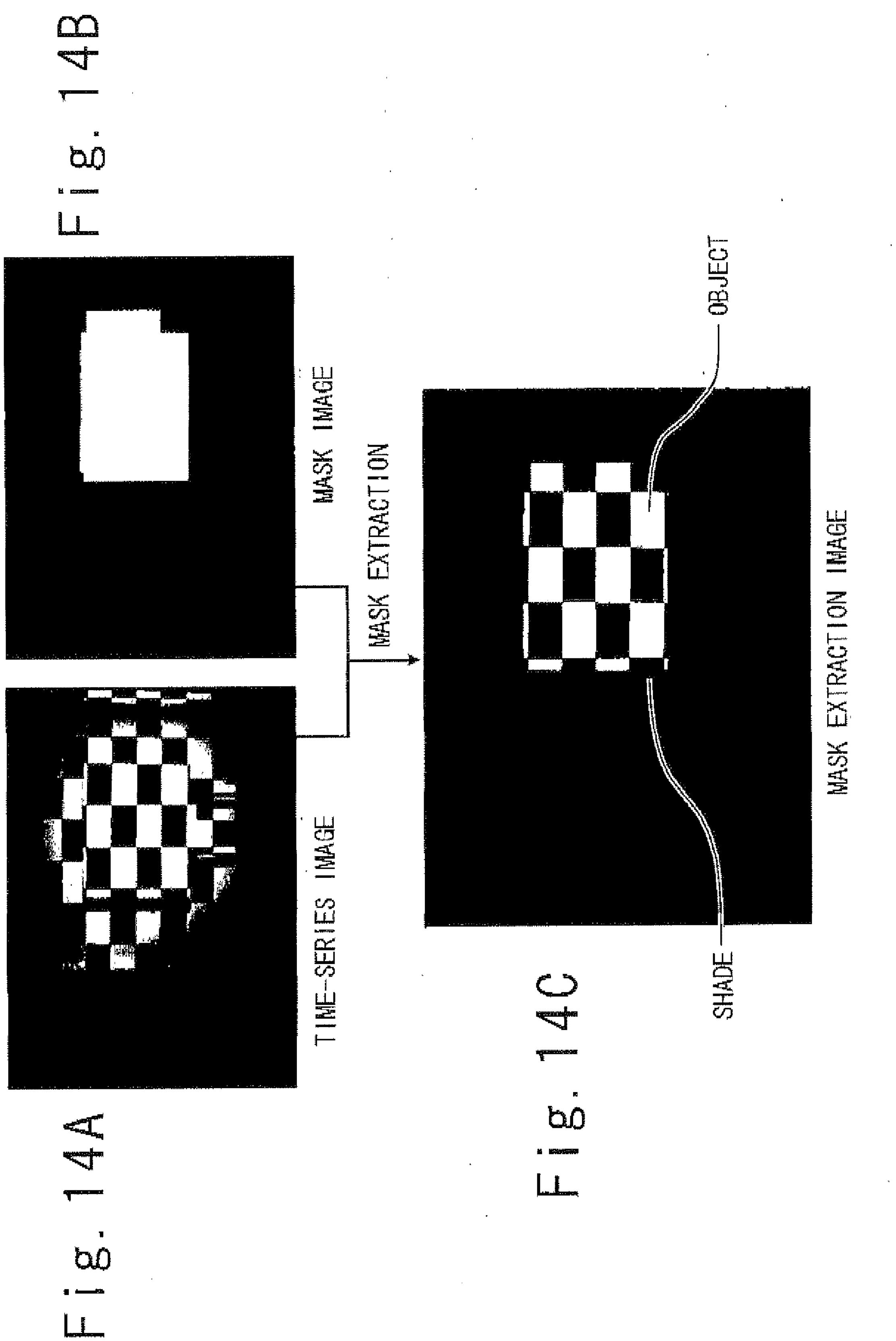


Fig. 14A

Fig. 14B

Fig. 14C

Fig. 15A

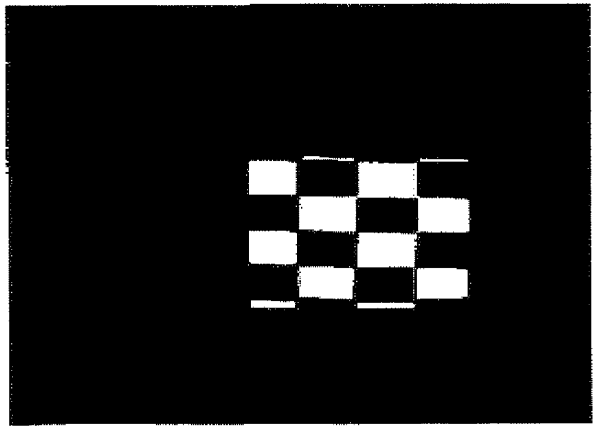

MASK EXTRACTION
(NOISE REDUCED) IMAGE

Fig. 15B

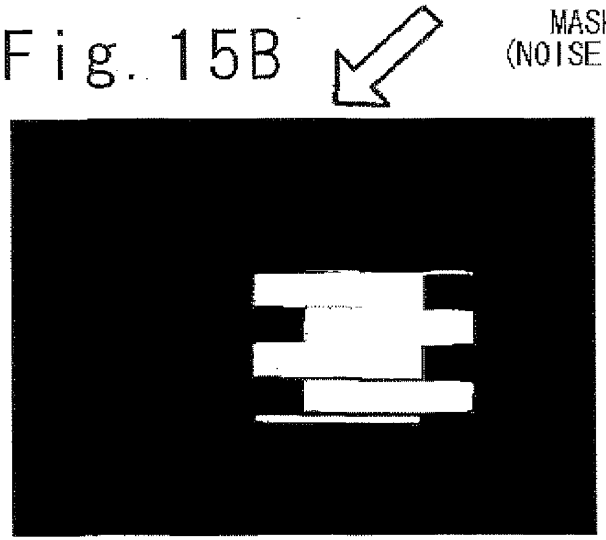

HORIZONTAL MASK (SHADE EXCLUDED) IMAGE

Fig. 15C

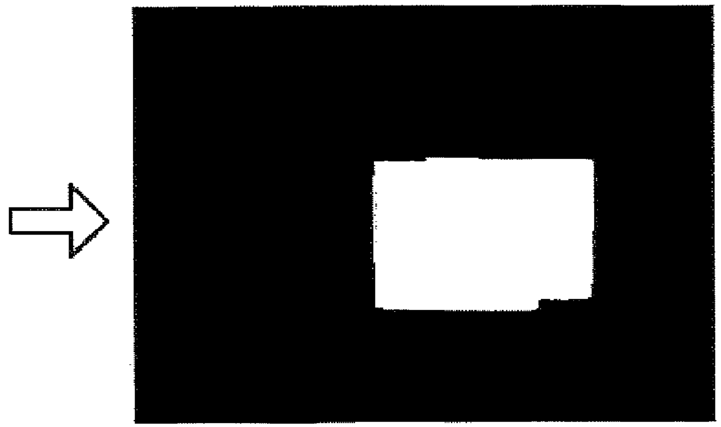

SHADE EXCLUDED MASK IMAGE

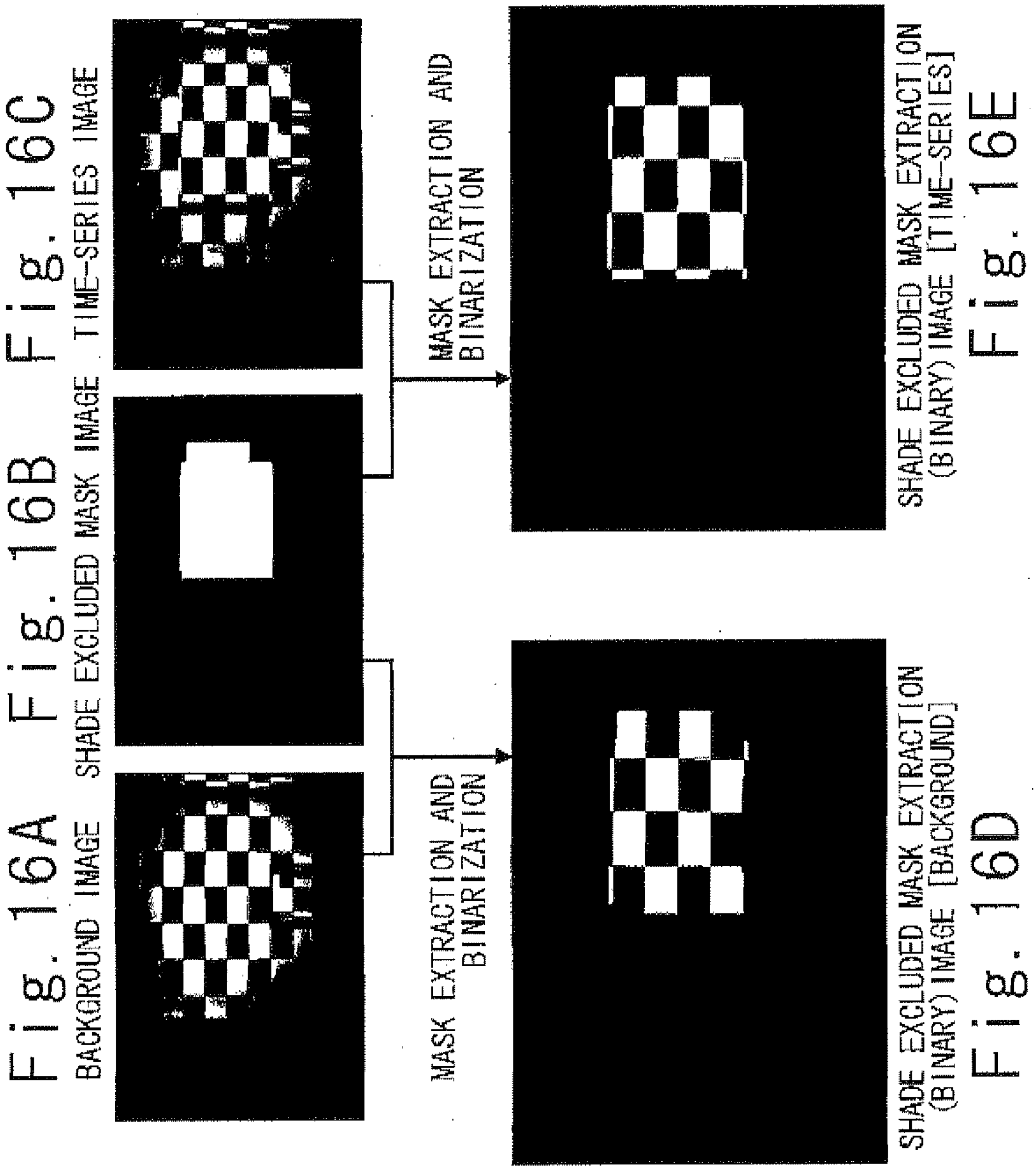
Fig. 16A
BACKGROUND IMAGE
Fig. 16B
SHADE EXCLUDED MASK IMAGE
Fig. 16C
TIME-SERIES IMAGE
MASK EXTRACTION AND BINARIZATION
MASK EXTRACTION AND BINARIZATION
SHADE EXCLUDED MASK EXTRACTION (BINARY) IMAGE [BACKGROUND]
Fig. 16D
SHADE EXCLUDED MASK EXTRACTION (BINARY) IMAGE [TIME-SERIES]
Fig. 16E

Fig. 17A

Fig. 17B

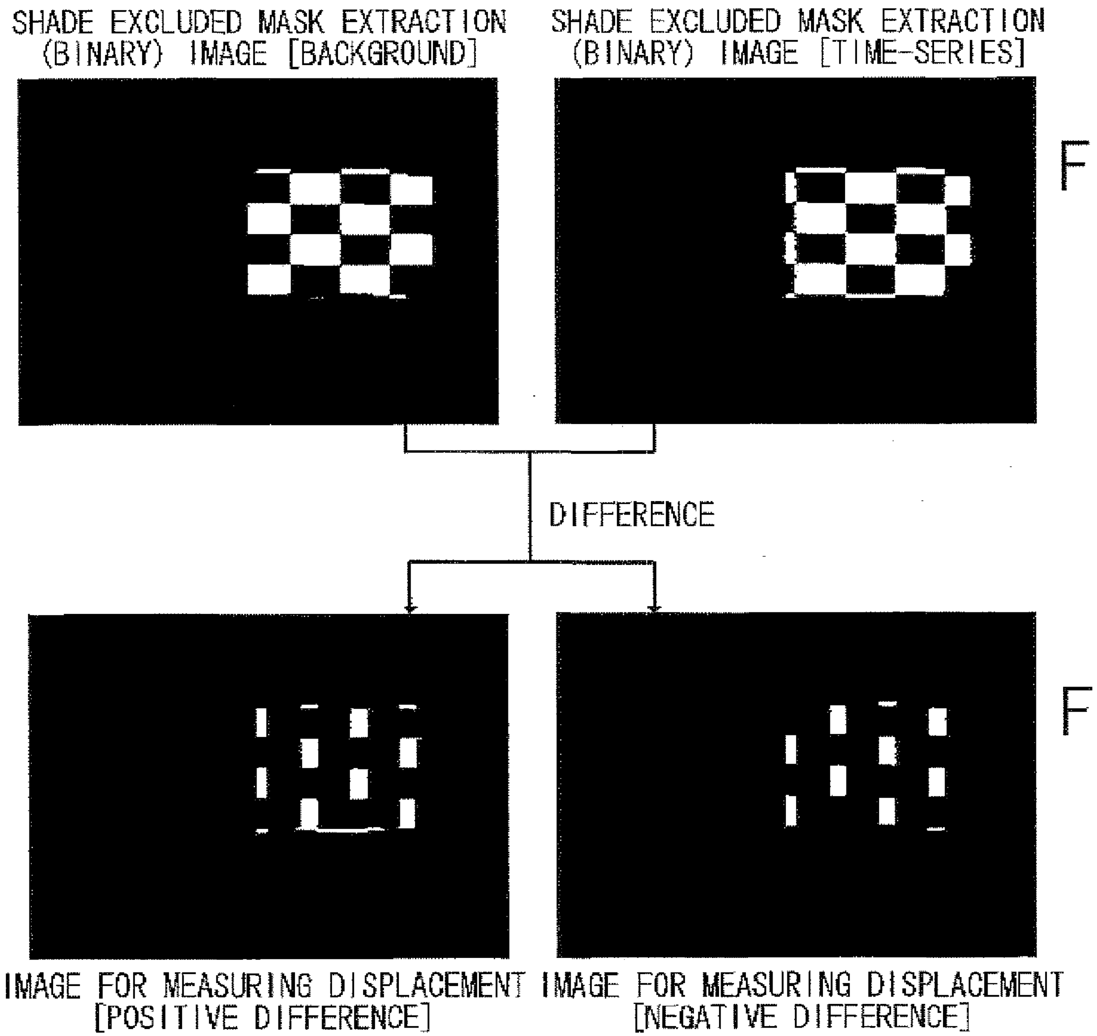


Fig. 17C

Fig. 17D

Fig. 18

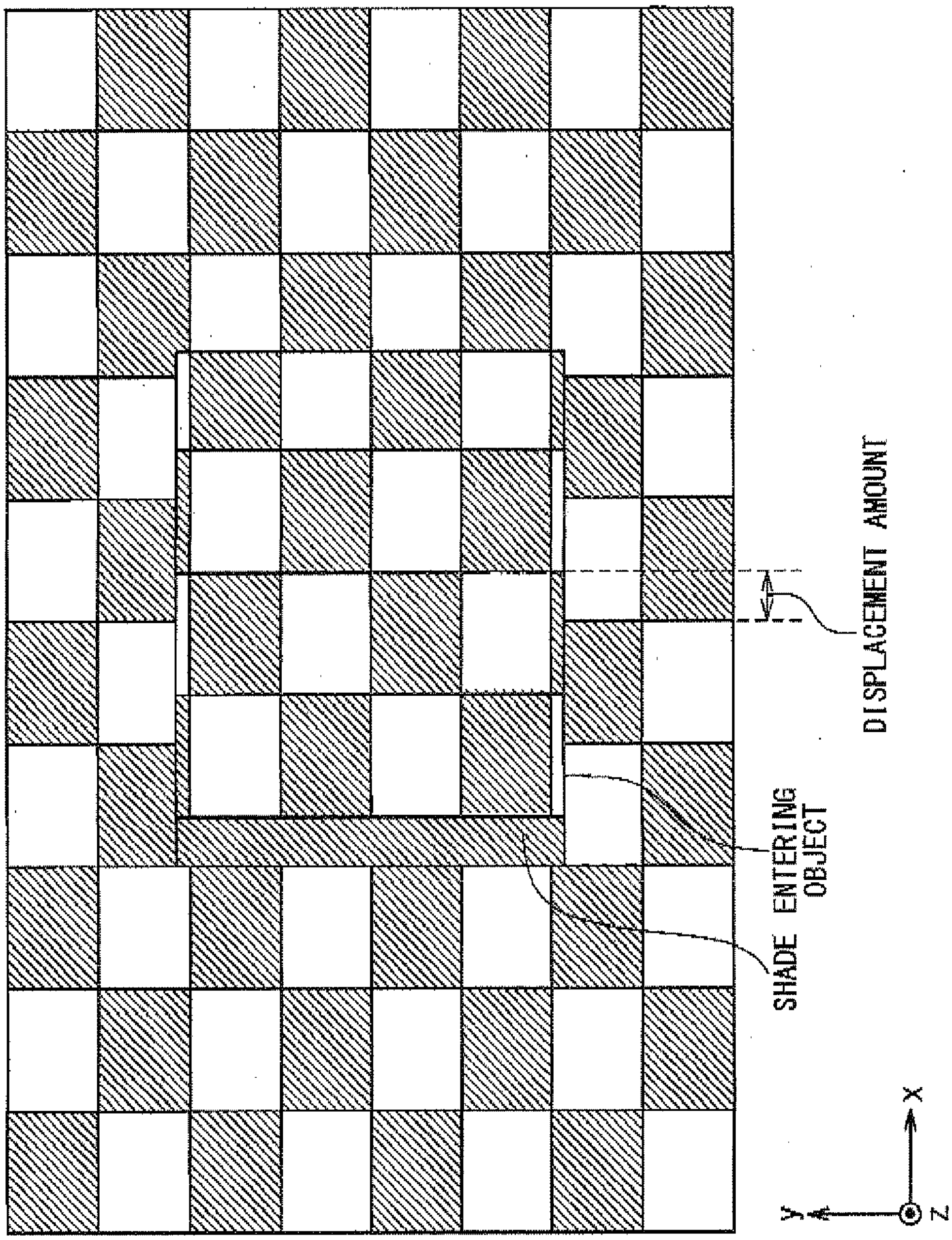

Fig. 19A

Fig. 19B

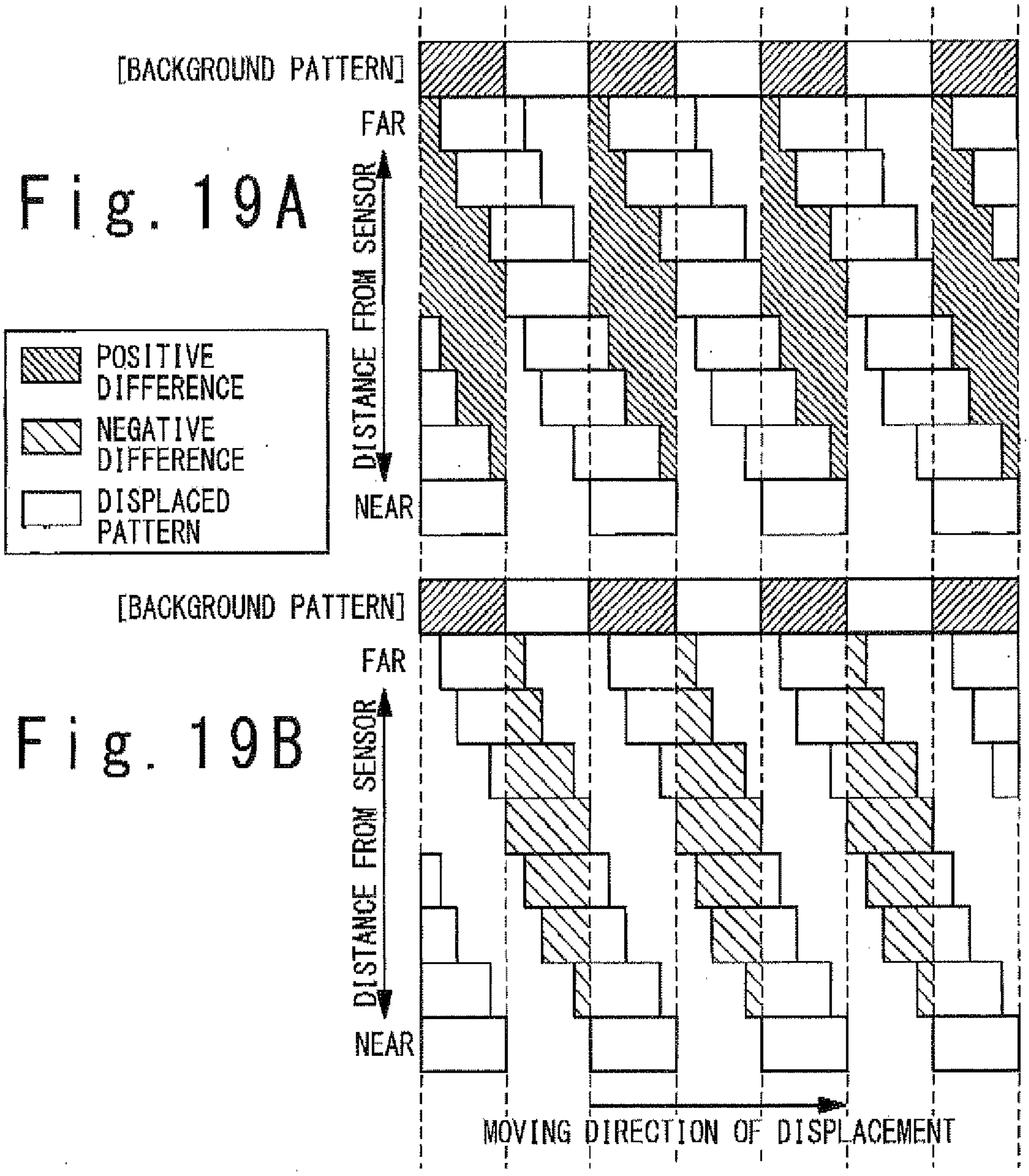

# Fig. 20

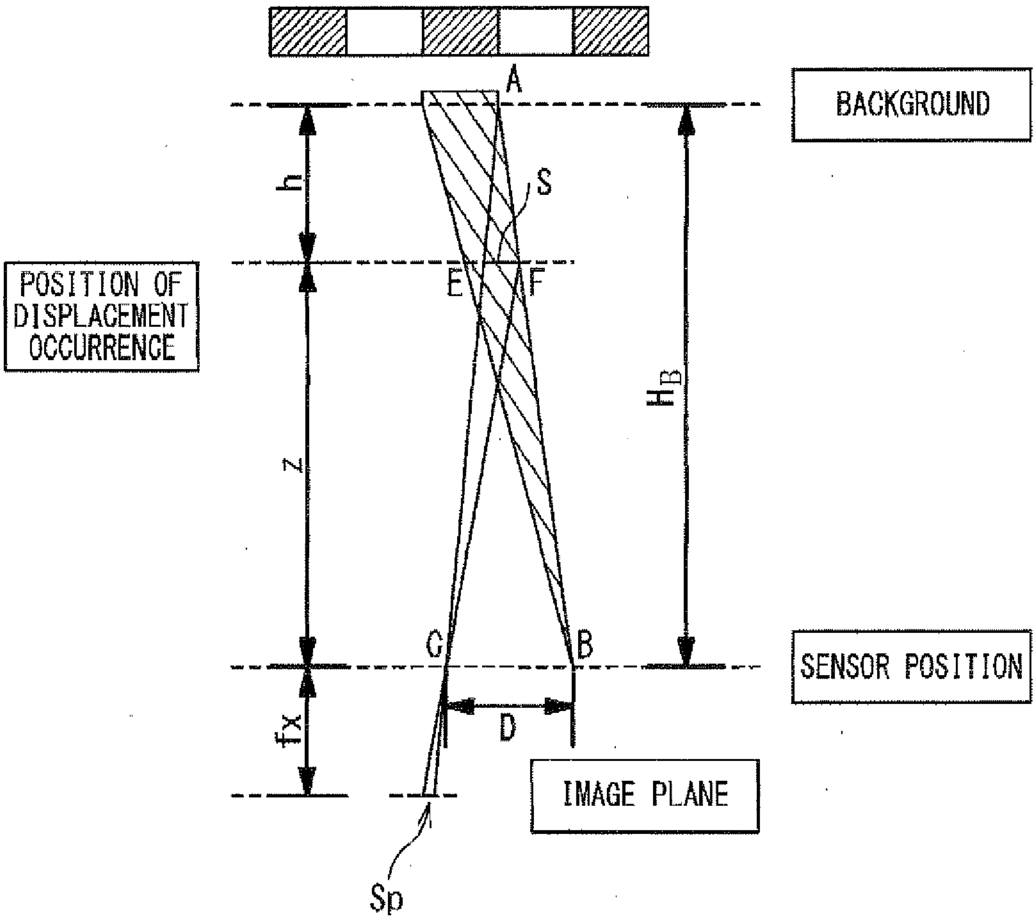
A
BACKGROUND
h
S
POSITION OF DISPLACEMENT OCCURRENCE
E
F
$H_B$
z
C
B
SENSOR POSITION
fx
D
IMAGE PLANE
Sp

**INTERNATIONAL SEARCH REPORT**

International application No.
PCT/JP2008/060354

A. CLASSIFICATION OF SUBJECT MATTER
*G08B25/04*(2006.01)i, *G06T1/00*(2006.01)i, *G08B25/00*(2006.01)i

According to International Patent Classification (IPC) or to both national classification and IPC

B. FIELDS SEARCHED

Minimum documentation searched (classification system followed by classification symbols)
G08B25/04, G06T1/00, G08B25/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-250607 A (Optex Co., Ltd.), 06 September, 2002 (06.09.02), Par. Nos. [0021] to [0022], [0037] to [0038]; Fig. 1 (Family: none) | 1-12 |
| X<br>Y<br>A | JP 2004-227556 A (Sumitomo Osaka Cement Co., Ltd.), 12 August, 2004 (12.08.04), Par. Nos. [0036], [0047], [0057] to [0062], [0068], [0069], [0071], [0075], [0077], [0078]; Figs. 4, 5 (Family: none) | 14<br>1-12,15<br>13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 September, 2008 (01.09.08) | Date of mailing of the international search report<br>16 September, 2008 (16.09.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/060354

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-3366 A (Sumitomo Osaka Cement Co., Ltd.), 06 January, 2005 (06.01.05), Par. Nos. [0063] to [0066] (Family: none) | 4,15 |
| Y | JP 2001-249008 A (Nikon Corp.), 14 September, 2001 (14.09.01), Par. No. [0063]; Fig. 7 (Family: none) | 8 |
| Y | JP 4-10099 A (Toshiba Corp.), 14 January, 1992 (14.01.92), Page 2, lower left column, lines 9 to 13 (Family: none) | 12 |
| A | JP 2005-508027 A (Honeywell International Inc.), 24 March, 2005 (24.03.05), Par. Nos. [0006], [0015], [0018], [0020] to [0028]; Figs. 1A, 3B & US 2002/0125435 A1 & US 2004/0256541 A1 & US 2007/0131850 A1 & EP 1354303 B1 & EP 1634259 B1 & WO 2002/103649 A2 & WO 2004/114243 A1 & DE 60204280 D & DE 60204280 T & DE 602004009793 D & AT 296471 T | 1-15 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007151300 A
- JP HEISEI927021 A
- JP 2001249008 A